(19) **Europäisches Patentamt**
**European Patent Office**
**Office européen des brevets**

(11) **EP 4 711 027 A1**

(12) **EUROPEAN PATENT APPLICATION**
published in accordance with Art. 153(4) EPC

(43) Date of publication:
**18.03.2026 Bulletin 2026/12**

(21) Application number: **24803391.2**

(22) Date of filing: **24.04.2024**

(51) International Patent Classification (IPC):
**B01D 53/047** (2006.01)    **B01D 53/62** (2006.01)
**B01D 53/82** (2006.01)    **C01B 32/50** (2017.01)

(52) Cooperative Patent Classification (CPC):
**B01D 53/047; B01D 53/62; B01D 53/82;
C01B 32/50;** Y02C 20/40

(86) International application number:
**PCT/JP2024/016160**

(87) International publication number:
**WO 2024/232278 (14.11.2024 Gazette 2024/46)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **11.05.2023 JP 2023078609**

(71) Applicant: **ASAHI KASEI KABUSHIKI KAISHA
Tokyo 100-0006 (JP)**

(72) Inventors:
• **AKAOGI, Takayuki
Tokyo 100-0006 (JP)**
• **OHKUBO, Atsushi
Tokyo 100-0006 (JP)**

(74) Representative: **dompatent
Partnerschaft von
Patentanwälten und Rechtsanwälten mbB
Deichmannhaus am Dom
Bahnhofsvorplatz 1
50667 Köln (DE)**

(54) **GAS SEPARATION METHOD, METHOD FOR PRODUCING PURIFIED GAS, AND GAS SEPARATION DEVICE**

(57)    A gas separation method for separating carbon dioxide and a gaseous substance A different from carbon dioxide, from a mixed gas containing the carbon dioxide and the gaseous substance A using an adsorption column packed with an adsorbent, the method including an adsorption step of introducing the mixed gas into the adsorption column to allow carbon dioxide to be adsorbed onto the adsorbent and to extract a gaseous substance A, a cleaning step of introducing carbon dioxide into the adsorption column to discharge the gaseous substance A in the adsorption column and to clean the adsorption column, and a desorption step of exhausting carbon dioxide under reduced pressure from the adsorption column, to extract the carbon dioxide from the adsorbent, in which an amount Q [NL] of the carbon dioxide introduced into the adsorption column in the cleaning step satisfies $Q \leq 5.5x$ under the assumption that a volume of the adsorbent packed in the adsorption column is $x$ [L].

Figure 1

EP 4 711 027 A1

# EP 4 711 027 A1

## Description

### Technical Field

The present invention relates to a gas separation method, a method for producing a purified gas, and a gas separation apparatus.

### Background Art

In recent years, a need for separation of carbon dioxide has been expanded for emission reduction of carbon dioxide. While there are some separation methods of carbon dioxide, one thereof is a separation method with an adsorbent. Examples of such a separation method with an adsorbent include a pressure swing-type adsorption-separation method (PSA: Pressure Swing Adsorption) which includes lowering the pressure in desorption of gas as compared with the pressure in adsorption of gas and utilizing the difference between the amount of adsorption at a higher pressure and the amount of adsorption at a lower pressure to perform gas separation, and a temperature swing-type adsorption-separation method (TSA: Thermal Swing Adsorption) which includes raising the temperature in desorption of gas as compared with the temperature in adsorption of gas and utilizing the difference between the amount of adsorption at a lower temperature and the amount of adsorption at a higher temperature to perform gas separation. Furthermore, these methods are combined to provide a pressure-temperature swing-type adsorption-separation method (PTSA: Pressure and Thermal Swing Adsorption).

For example, there has been disclosed as a carbon dioxide production method capable of extracting high-purity methane and high-purity carbon dioxide from biogas, a carbon dioxide production method including separating not only methane, but also carbon dioxide, from biogas, according to a pressure variation adsorption method using an adsorption column packed with an adsorbent (Patent Literature 1).

### Citation List

### Patent Literature

Patent Literature 1: Japanese Patent Laid-Open No. 2015-67504

### Summary of Invention

### Technical Problem

As a method for producing higher-purity carbon dioxide, there is a method including performing a cleaning operation including distributing biogas to an adsorption column and then distributing carbon dioxide to the adsorption column to push out methane remaining in a space and methane attached to an adsorbent and thus decrease methane in the adsorption column as much as possible, and then performing vacuuming to recover carbon dioxide.

The cleaning operation not only allows high-purity carbon dioxide to be obtained, but also can increase the rate of recovery of methane, but much carbon dioxide is adsorbed to the adsorbent. When a porous body such as zeolite or activated carbon is used as the adsorbent, the volume of the porous body is expanded by adsorption of much carbon dioxide. An adsorbent molded article obtained by molding the porous body with a binder has the problem of being more probably expanded and thus embrittled, for example, cracked or powdered.

The present invention relates to a gas separation method, a method for producing a purified gas, and a gas separation apparatus, for separating carbon dioxide and a gaseous substance A, in which, even when high-purity carbon dioxide is obtained, an adsorbent can be inhibited from being powdered.

### Solution to Problem

The present inventors have found that a porous body less adsorbing carbon dioxide during a cleaning operation can be used as an adsorbent to inhibit the adsorbent from being powdered even when high-purity carbon dioxide is obtained.

The present invention encompasses the following embodiments.

<1> A gas separation method for separating carbon dioxide and a gaseous substance A different from carbon dioxide, from a mixed gas containing the carbon dioxide and the gaseous substance A using an adsorption column packed with an adsorbent, the method including

an adsorption step of introducing the mixed gas into the adsorption column to allow carbon dioxide to be adsorbed onto the adsorbent and to extract a gaseous substance A,

a cleaning step of introducing carbon dioxide into the adsorption column to discharge the gaseous substance A in the adsorption column and to clean the adsorption column, and

a desorption step of exhausting carbon dioxide under reduced pressure from the adsorption column, to extract the carbon dioxide from the adsorbent,

wherein an amount Q [NL] of the carbon dioxide introduced into the adsorption column in the cleaning step satisfies $Q \leq 5.5x$ under the assumption that a volume of the adsorbent packed in the adsorption column is x [L].

<2> The gas separation method according to <1>, wherein the adsorbent in the adsorption step satisfies $(V_2 - V_1)/V_1 \leq 0.160$ under the assumption that an amount of carbon dioxide adsorption per gram of the adsorbent at a temperature of 35°C and at 40 kPa is $V_1$ and an amount of carbon dioxide adsorption per gram of the adsorbent at a temperature of 35°C and at 100 kPa is $V_2$.

<3> The gas separation method according to <1> or <2>, wherein,

in the adsorption step, the adsorption column is in a pressurized state, and
the adsorbent satisfies

$(V_3 - V_2)/V_2 \leq 0.155$ under the assumption that an amount of carbon dioxide adsorption per gram of the adsorbent at a temperature of 35°C and at 100 kPa is $V_2$ and an amount of carbon dioxide adsorption per gram of the adsorbent at a temperature of 35°C and at 200 kPa is $V_3$, and

the method includes a pressure dropping step of reducing a pressure in the adsorption column after the adsorption step and before the cleaning step.

<4> The gas separation method according to any one of <1> to <3>, wherein a rate of recovery of the gaseous substance A is 90% or more based on a total amount of the gaseous substance A in the mixed gas introduced into the adsorption column in the adsorption step.

<5> The gas separation method according to any one of <1> to <4>, wherein carbon dioxide is introduced into the adsorption column in the cleaning step, by use of an exhaust pressure of a vacuum pump that exhausts carbon dioxide under reduced pressure from the adsorption column in the desorption step.

<6> The gas separation method according to any one of <1> to <5>, wherein the amount Q [NL] of the carbon dioxide introduced into the adsorption column in the cleaning step satisfies $Q > 0.10x$.

<7> The gas separation method according to any one of <1> to <6>, wherein initiation and termination of introduction of carbon dioxide into the adsorption column in the cleaning step are performed by time control.

<8> The gas separation method according to any one of <1> to <7>, wherein a purity of the gaseous substance A recovered is 90% by volume or more.

<9> The gas separation method according to any one of <1> to <8>, wherein a purity of the carbon dioxide recovered is 90% by volume or more.

<10> The gas separation method according to any one of <1> to <9>, wherein the $V_1$ in the adsorbent satisfies $V_1 \geq 20$ cc/g.

<11> The gas separation method according to any one of <1> to <10>, wherein the adsorbent is a zeolite.

<12> The gas separation method according to <11>, wherein the adsorbent is a GIS-type zeolite.

<13> The gas separation method according to any one of <1> to <12>, wherein an average temperature in the adsorption step is 0°C or more.

<14> The gas separation method according to any one of <1> to <13>, wherein an ultimate pressure $P_b$ in the desorption step is 30 kPa or less.

<15> The gas separation method according to any one of <1> to <14>, wherein an average temperature in the desorption step is 150°C or less.

<16> The gas separation method according to any one of <1> to <15>, wherein a moisture content of the mixed gas is 1000 ppm by volume or less.

<17> The gas separation method according to any one of <1> to <16>, wherein the gaseous substance A is at least one selected from methane, ethane, nitrogen, carbon monoxide, hydrogen, argon, and dimethyl ether.

<18> A method for producing a purified gas, comprising obtaining a purified gaseous substance A or purified carbon dioxide by the gas separation method according to any one of <1> to <17>.

<19> A gas separation apparatus that separates carbon dioxide and a gaseous substance A different from carbon dioxide, from a mixed gas containing the carbon dioxide and the gaseous substance A, the gas separation apparatus including

an adsorption column packed with an adsorbent that adsorbs carbon dioxide,

a gaseous substance A recovery line that extracts the gaseous substance A from the adsorption column,

a carbon dioxide recovery line that extracts carbon dioxide from the adsorption column having a pressure reducing apparatus,

a carbon dioxide accommodating tank that accommodates carbon dioxide sent from the carbon dioxide recovery line, and

a carbon dioxide purge line that supplies carbon dioxide from the carbon dioxide accommodating tank to the adsorption column,

wherein the adsorbent satisfies

$(V_2 - V_1)/V_1 \leq 0.160$ under the assumption that an amount of carbon dioxide adsorption per gram of the adsorbent at a temperature of 35°C and at 40 kPa is $V_1$ and an amount of carbon dioxide adsorption per gram of the adsorbent at a temperature of 35°C and at 100 kPa is $V_2$.

According to the present invention, it is possible to provide a gas separation method, a method for producing a purified gas, and a gas separation apparatus, for separating carbon dioxide and a gaseous substance A, in which, even when high-purity carbon dioxide is obtained, an adsorbent can be inhibited from being powdered.

**Brief Description of Drawings**

[Figure 1] Figure 1 is a diagram showing a schematic configuration of a gas separation apparatus 100;

[Figure 2] Figure 2 is a conceptual diagram showing the respective changes of pressure variations over time, of a carbon dioxide adsorption column 3a and a carbon dioxide adsorption column 3b, by an action of the gas separation apparatus 100;

[Figure 3] Figure 3 is a diagram showing a schematic configuration of a biogas purification system 1000 in which the gas separation apparatus 100 is applied to biogas purification.

**Description of Embodiments**

Hereinafter, a mode for carrying out the present invention (hereinafter, referred to as "the present embodiment".) is described in detail. The present invention is not limited to the following description, and can be variously modified and carried out within the gist thereof.

[Gas separation method]

A gas separation method according to the present embodiment is

a gas separation method for separating carbon dioxide and a gaseous substance A different from carbon dioxide, from a mixed gas containing the carbon dioxide and the gaseous substance A using an adsorption column packed with an adsorbent, the method including

an adsorption step of introducing the mixed gas into the adsorption column to allow carbon dioxide to be adsorbed onto the adsorbent and to extract a gaseous substance A,

a cleaning step of introducing carbon dioxide into the adsorption column to discharge the gaseous substance A in the adsorption column and to clean the adsorption column, and

a desorption step of exhausting carbon dioxide under reduced pressure from the adsorption column, to extract the carbon dioxide from the adsorbent,

wherein the amount Q[L] of the carbon dioxide introduced into the adsorption column in the cleaning step satisfies $Q < 5.5 \times x$ under the assumption that the volume of the adsorbent packed in the adsorption column is x [L].

According to the above configuration, it is possible to provide a gas separation method, a method for producing a purified gas, and a gas separation apparatus, for separating carbon dioxide and a gaseous substance A, in which, even when the rate of recovery of a gaseous substance A such as methane is increased or high-purity carbon dioxide is obtained, an adsorbent can be inhibited from being cracked and being powdered.

The amount of carbon dioxide used for cleaning, when increased to a certain level, tends to lead to an enhancement in the rate of recovery of the gaseous substance A to be recovered, whereas an absorbent, in which adsorption is performed up to the saturated amount of adsorption or an amount close thereto, tends to be thus cracked and then powdered due to an increase in the maximum amount of expansion by such adsorption.

Adsorption of gas is in an equilibrium state between adsorption and desorption, and, if carbon dioxide flows in an amount equal to or more than the amount of carbon dioxide necessary for cleaning, adsorption-desorption of carbon dioxide can excessively occur particularly at an interface of a particle having an adsorption site through which a carbon dioxide molecule easily flows, or at an interface with a binder, to cause repeating of expansion-shrinkage and thus increase the probability of the occurrence of cracks. Accordingly, the amount of carbon dioxide to be allowed to flow during cleaning is more preferably smaller. An object of cleaning with carbon dioxide is to clean out a gaseous substance A remaining in a void, and the present inventor has found that the amount of a cleaning gas, which can allow for sufficient cleaning and which does not cause cracking and powdering of an adsorbent, can be defined from the volume of an adsorbent packed in an adsorption column.

In the gas separation method according to the present embodiment, the purity of the carbon dioxide extracted in the desorption step once is preferably 90% by volume or more.

The above configuration enables high-purity carbon dioxide and a gaseous substance A to be efficiently separated. The gas separation method according to the present embodiment provides carbon dioxide and a gaseous substance A as purified gases. In the gas separation method according to the present embodiment, the adsorption step, the cleaning step and the desorption step may be repeatedly performed depending on the intended purity of each of the purified gases, and these steps are repeatedly performed to provide high-purity purified gases.

The rate of recovery of the gaseous substance A extracted in the adsorption step once here means the rate of recovery in any second or later pressure variation cycle. While the adsorbent in the first pressure variation cycle (at start-up) is in a state where almost no carbon dioxide is adsorbed, the adsorption step is initiated in any second or later pressure variation cycle, in a state where a given amount of carbon dioxide in the previous cycle is adsorbed. Therefore, the rate of recovery in such any second or later cycle is defined as the rate of recovery of the gaseous substance A extracted in the adsorption step once.

The phrases "adsorption step once", "cleaning step once", and "desorption step once" mean respective single pressure variation cycles of adsorption columns in the adsorption step, the cleaning step, and the desorption step.

<Gaseous substance A>

The gaseous substance A may be a gaseous substance different from carbon dioxide. The "gaseous substance" means a substance that is gaseous at an ordinary temperature of 25°C under ordinary pressure. Examples of the gaseous substance A include methane, ethane, nitrogen, carbon monoxide, hydrogen, argon, and dimethyl ether. Among such gaseous substances A, methane, ethane, and nitrogen are preferred, methane and ethane are more preferred, and methane is further preferred.

<Mixed gas>

The mixed gas used as a starting material includes carbon dioxide and the gaseous substance A.

The content of the carbon dioxide in the mixed gas may be 1% by volume or more, 5% by volume or more, 10% by volume or more, 20% by volume or more, or 30% by volume or more. The content of the carbon dioxide in the mixed gas may be 99% by volume or less, 90% by volume or less, 80% by volume or less, 70% by volume or less.

The content of the gaseous substance A in the mixed gas may be 1% by volume or more, 5% by volume or more, 10% by volume or more, 20% by volume or more, or 30% by volume or more. The gaseous substance A in the mixed gas may be contained at 99% by volume or less, 90% by volume or less, 80% by volume or less, or 70% by volume or less.

The moisture content of the mixed gas is preferably 1000 ppm by volume or less, more preferably 500 ppm by volume or less, further preferably 100 ppm by volume or less. With the moisture content falling within the range, adsorption performance of the adsorbent can be highly exhibited. The moisture content of the mixed gas can be, for example, measured with a dew-point meter and converted into a moisture content with a method described in JIS Z8806: 2001.

<Adsorption step >

The adsorption column is packed with the adsorbent. The adsorption column is configured so as to enable the mixed gas to be introduced, thereby contacting the adsorbent and the mixed gas. The adsorption step is to contact the mixed gas with the adsorbent, thereby adsorbing carbon dioxide in the mixed gas to the adsorbent. Carbon dioxide can be adsorbed in the mixed gas, to extract the gaseous substance A.

The adsorbent used in the adsorption column, although described later, is an inorganic porous material such as zeolite, silica, or alumina. When the adsorbent is an inorganic porous material such as zeolite, silica, or alumina, the bulk density is 0.9 to 1.3 g/cc. The adsorbent, when has a columnar or spherical shape, has a diameter of about 1 to 10 mm and a length of about 3 to 20 mm. Examples of other shapes than these shapes include a honeycomb structure, and a ring shape and a macaroni shape. Even when any shape is adopted, the rate of packing of the adsorbent that is packed in the adsorption column (the proportion of the adsorbent in the volume of a fixed bed) is 60 to 90% by volume and the void ratio (the proportion of a gap between such adsorbents. The adsorbent is porous, but the volume of a pore in the adsorbent is not included) is 10 to 40% by volume.

The adsorption pressure $P_a$ in the adsorption step is preferably 50 to 3000 kPa, more preferably 60 to 2500 kPa or less, further preferably 70 to 2000 kPa or less. The adsorption pressure $P_a$ means the pressure around an adsorption column inlet through which the mixed gas is introduced.

The adsorption column may be in a pressurized state in the adsorption step. The "pressurized state" means a pressure of more than 101.3 kPa. In the case of a pressurized state, the adsorption pressure $P_a$ in the adsorption step is preferably 102 to 3000 kPa, more preferably 150 to 2500 kPa or less, further preferably 200 to 2000 kPa or less.

The carbon dioxide partial pressure $P_{a\text{-}CO2}$ in the adsorption step is preferably 1 to 500 kPa, more preferably 10 to 400 kPa, further preferably 20 to 400 kPa. The carbon dioxide partial pressure $P_{CO2}$ can be adjusted by the introduction pressure of the mixed gas and the carbon dioxide concentration in the mixed gas.

The average temperature in the adsorption step is preferably 0°C or more, preferably 10°C or more, further preferably 25°C or more from the viewpoint of an increase in efficiency of desorption of carbon dioxide in the desorption step to be subsequently performed and saving of the power per mixed gas to be treated. The average temperature in the adsorption step is preferably 400°C or less, more preferably 300°C or less, further preferably 200°C or less. The average temperature in the adsorption step means the average temperature of gas around an adsorption column outlet in the adsorption step.

<Pressure dropping step>

When the pressure in the adsorption step is higher than the pressure in the cleaning step, a pressure dropping step of dropping the pressure in the adsorption column to the pressure (for example, ordinary pressure) in the cleaning step, before the cleaning step, may be included. The rate of recovery of the gaseous substance A can be increased by recycling the gas released during pressure dropping, as a starting material gas. Here, an increase of the gas to be recycled increases the electric power used in a compression pump or a vacuum pump, and therefore setting is preferably made in terms of the balance between a target rate of recovery and the electric power cost.

Preferably, in the adsorption step, the adsorption column is in a pressurized state, and the adsorbent satisfies $(V_3 - V_2)/V_2 \leq 0.155$ under the assumption that the amount of carbon dioxide adsorption per gram of the adsorbent at a temperature of 35°C and at 100 kPa is $V_2$ and the amount of carbon dioxide adsorption per gram of the adsorbent at a temperature of 35°C and at 200 kPa is $V_3$, and
the method includes a pressure dropping step of reducing the pressure in the adsorption column after the adsorption step and before the cleaning step.

The amount of adsorption of carbon dioxide is more preferably larger because sufficient separation and recovery of carbon dioxide can be performed by a small amount of the adsorbent, whereas a large amount of adsorption of carbon dioxide in the cleaning step is not preferred because the amount of carbon dioxide necessary for cleaning is increased to not only increase the electric power cost for flowage of carbon dioxide, but also increase carbon dioxide included in the adsorbent and thus increase the maximum amount of expansion of the adsorbent, thereby increasing the probability of powdering. In other words, the slope of an adsorption isotherm is more preferably smaller, and $(V_3 - V_2)/V_2 \leq 0.155$ is preferably satisfied. A preferred range of $(V_3 - V_2)/V_2$, although can decrease the probability of powdering, causes the electric power cost for introduction of carbon dioxide used for cleaning in the cleaning step. When the pressure dropping step is then included, carbon dioxide adsorbed to the adsorbent can be desorbed and then used as one portion carbon dioxide for cleaning, and an increase in electric power cost can be suppressed. In other words, when the above conditions are satisfied, not only powdering of the adsorbent can be suppressed, but also an increase in electric power cost can be suppressed, even when the pressure in the adsorption step is higher than the pressure in the cleaning step.

<Cleaning step>

A cleaning step of introducing carbon dioxide into the adsorption column to discharge the gaseous substance A in the adsorption column and to clean the adsorption column is performed after the adsorption step, and thus the purity of carbon dioxide purified, obtained in a desorption step described below, can be increased and the rate of recovery of the gaseous substance A can be enhanced. In the cleaning step, carbon dioxide is distributed into the adsorption column to not only replace one portion of the gaseous substance A adsorbed to the adsorbent with carbon dioxide, but also push out the gaseous substance A remaining in a space, resulting in an enhancement in carbon dioxide concentration in the adsorption column.

The cleaning step is a step of allowing carbon dioxide recovered or carbon dioxide prepared in advance to flow in the adsorption column in which the adsorption step is completed, to clean out the gaseous substance A adsorbed to a void and the adsorbent in the adsorption column and eject the gaseous substance A from the adsorption column.

The present inventor has found that the amount of carbon dioxide used for cleaning, when increased to a certain level, tends to lead to an increase in the rate of recovery of the gaseous substance A to be recovered, whereas an absorbent, in which adsorption is performed up to the saturated amount of adsorption or an amount close thereto, tends to be thus cracked and then powdered due to an increase in the maximum amount of expansion by such adsorption.

In the case of use of carbon dioxide recovered, as the amount of gas introduced during cleaning is increased, the amount of gas recycled is increased and the electric power expense is higher.

There has been made studies about conditions for not only allowing the cleaning effect to be sufficiently exerted, but also not causing cracking and powdering of the adsorbent, and as a result, it has been revealed that the amount $Q$ [NL] of carbon dioxide used for cleaning preferably satisfies $Q \leq x \times 5.5$. $Q$ [NL] more preferably satisfies $Q \leq x \times 5.3$, further preferably satisfies $Q \leq x \times 5.0$.

When the adsorbent is an inorganic porous material such as zeolite, silica, or alumina, the maximum amount of adsorption of gas by the adsorbent is 20 to 110 times the volume of the adsorbent, and when adsorption-desorption is repeated, a high degree of vacuum is necessary for desorption of the whole gas adsorbed and therefore, preferably, complete desorption and recycling are not performed and the effective amount of adsorption is set to 5 to 40 times the volume. Even in such a case, the adsorbent adsorbs a much higher volume of gas than the volume of the adsorbent packed. The above range is preferred in consideration of the effective amount of adsorption.

The present inventor has considered that, since a much larger amount of gas molecules than the amount corresponding to the volume of the adsorbent are accommodated in a pore in the adsorbent in terms of the nature of the adsorbent and an equilibrium state is kept even when is in a saturated state, the amount of introduction of carbon dioxide necessary for the cleaning step can be regarded at least as the amount of ejection of gas in the void, namely, the amount of gas, corresponding to the volume of the void, regardless of the type or shape of the adsorbent, although such gas molecules come and go. Accordingly, the amount $Q$ [NL] of the carbon dioxide introduced into the adsorption column in the cleaning step preferably satisfies $Q > 0.10 \times x$, more preferably satisfies $Q > 0.12 \times x$, further preferably satisfies $Q > 0.16 \times x$ under the assumption that the volume of the adsorbent packed in the adsorption column is $x$ [L].

The volume of the adsorbent is determined as the volume per mass of the adsorbent from the amount of rise of a liquid level in placing of the adsorbent into a measuring cylinder in which paraffin is placed, and the mass of the adsorbent placed. The volume of the adsorbent placed in the adsorption column can be determined from the mass corresponding to such placement and the volume per mass determined by the above method.

An increase in amount of carbon dioxide used for cleaning and thus an increase in carbon dioxide flowing in the adsorption column lead to an increase in amount of carbon dioxide to which the adsorbent is exposed. Adsorption is actually an equilibrium state in which adsorption and desorption are repeated, and an increase in amount of carbon dioxide to which the adsorbent is exposed leads to an increase in number of times of adsorption-desorption of carbon dioxide by the adsorbent and thus an increase in number of times of expansion-shrinkage, thereby causing the adsorbent to be easily cracked and powdered. Accordingly, the amount of carbon dioxide used for cleaning can be properly set to not only allow the rate of recovery to be kept high, but also prevent cracking and powdering.

The pressure $P_c$ in the adsorption column in the cleaning step is preferably a high pressure in order to sufficiently replace the gaseous substance A adsorbed to the adsorbent with carbon dioxide. In this regard, a high pressure causes a need for too much energy for pressurization, and therefore a lower pressure is more preferred in order to reduce the energy cost, for example, the electric power. The pressure $P_c$ is preferably 50 to 500 kPa, more preferably 70 to 450 kPa, further preferably 85 to 400 kPa from these viewpoints. The carbon dioxide partial pressure $P_{c\text{-}CO2}$ in the cleaning step is preferably 50 to 300 kPa, more preferably 70 to 200 kPa, further preferably 85 to 130 kPa from the same viewpoints.

In the cleaning step, carbon dioxide may be introduced into the adsorption column by use of the exhaust pressure of a vacuum pump that exhausts carbon dioxide under reduced pressure from the adsorption column in the desorption step. According to the above configuration, the energy necessary for carrying out the gas separation method can be saved.

The average temperature in the cleaning step is preferably 0°C or more, preferably 10°C or more, further preferably 25°C or more from the viewpoint of an increase in efficiency of desorption of carbon dioxide in the desorption step to be subsequently performed and saving of the power per mixed gas to be treated. The average temperature in the cleaning step is preferably 200°C or less, more preferably 120°C or less, further preferably 90°C or less. The average temperature in the cleaning step means the average temperature of gas around an adsorption column outlet in the cleaning step. While a higher temperature in the cleaning step is more preferred because desorption of carbon dioxide is promoted in the next desorption step, facilities are required to be increased, for example, the gas used for cleaning is required to be heated in advance, and therefore the temperature allowing for cleaning without heating of gas is preferred.

<Desorption step>

After the adsorption step, the adsorption column can be placed under reduced pressure to extract carbon dioxide in the desorption step. Thus, a purified gas of the gaseous substance A and a purified gas of carbon dioxide are obtained in the adsorption step and the desorption step.

The ultimate pressure $P_b$ in the desorption step is preferably 50 kPa or less, more preferably 30 kPa or less, further preferably 20 kPa or less, further preferably 15 kPa or less, further preferably 12 kPa or less, further preferably 10 kPa or less, further preferably 9 kPa or less. The ultimate pressure $P_b$ means the pressure around an exhaust outlet of the adsorption column packed with the adsorbent, at which the adsorption column is subjected to exhaust under reduced pressure.

The average temperature in the desorption step is preferably 0°C or more, more preferably 10°C or more, further preferably 25°C or more from the viewpoint of an increase in efficiency of desorption of carbon dioxide and saving of the power per mixed gas to be treated. The average temperature in the desorption step is preferably 200°C or less, more preferably 120°C or less, further preferably 90°C or less. The average temperature in the desorption step means the average temperature of desorption gas (carbon dioxide) around an adsorption column outlet in the desorption step. While a higher desorption temperature is more preferred because desorption of carbon dioxide is promoted, a high temperature of the adsorbent causes a decrease in amount of adsorption of carbon dioxide in the next adsorption step, and therefore desorption is preferably performed in a suitable temperature range.

The purity of the carbon dioxide extracted in the desorption step once is preferably 90% by volume or more, more preferably 92% by volume or more, further preferably 93% by volume or more, further preferably 94% by volume or more.

In the gas separation method according to the present embodiment, the purity of the gaseous substance A extracted in the adsorption step once is preferably 93% by volume or more, more preferably 94% by volume or more, further preferably 95% by volume or more. It is preferable for extracting the gaseous substance A having a preferred purity to use an adsorbent having a strong adsorption force of carbon dioxide. When the mixed gas of carbon dioxide and the gaseous substance A is distributed in the adsorption column, an adsorbent having a strong adsorption force of carbon dioxide is used to hardly desorb and leak out carbon dioxide adsorbed and hardly incorporate the gaseous substance A extracted, thereby increasing the purity of the gaseous substance A. Such an adsorbent having a strong adsorption force of carbon dioxide allows the amount of adsorption to be rapidly close to the saturated amount of adsorption with a low partial pressure of carbon dioxide. The strength of the adsorption force also affects both $V_1$ and $V_2$, a case where $V_1$ is a close value relative to $V_2$ indicates that even the amount of adsorption at 40 kPa is close to the amount of adsorption at 100 kPa, and simple evaluation with the value of $(V_2 - V_1)/V_1$ can be made. A preferred $(V_2 - V_1)/V_1$ is preferably 0.160 or less, further preferably 0.155 or less, further preferably 0.150 or less from the above viewpoint.

The rate of recovery of the carbon dioxide extracted in the adsorption step and the desorption step once is preferably 90% or more, more preferably 93% or more, further preferably 95% or more based on the total amount of the carbon dioxide in the mixed gas introduced into the adsorption column in the adsorption step once. The rate of recovery of the carbon dioxide extracted in the adsorption step and the desorption step once here means the rate of recovery in any second or later pressure variation cycle. While the adsorbent in the first pressure variation cycle (at start-up) is in a state where almost no carbon dioxide is adsorbed, the adsorption step is initiated in any second or later pressure variation cycle, in a state where a given amount of carbon dioxide in the previous cycle is adsorbed. Therefore, the rate of recovery in such any second or later cycle is defined as the rate of recovery of the carbon dioxide extracted in the adsorption step and the desorption step once.

According to the present embodiment, separation and recovery of carbon dioxide and the gaseous substance A (methane in the present Examples) can be performed and powdering is suppressed when the respective purities and rates of recovery are suitable conditions, and therefore durable separation and recovery of carbon dioxide and the gaseous substance A are achieved.

The purity of the gaseous substance A recovered by the present embodiment differs depending on the location for implementation and the usage method of the gaseous substance A, and is preferably 90% by volume or more, more preferably 92% by volume or more, further preferably 93% by volume or more, still further preferably 95% by volume or more. When the gaseous substance A is methane, the purity of methane is preferably 90% by volume or more because a sufficient amount of heat for fuel is obtained. Furthermore, high-purity methane is more preferred because such methane can be used as an alternative of natural gas and the amount of heat is also increased.

A higher rate of recovery of the gaseous substance A is more preferred because the amount of production of the gaseous substance A per starting material is increased and a reduction in cost is achieved. The rate of recovery of the gaseous substance A is preferably 90% or more, more preferably 92% or more, further preferably 93% or more, still further preferably 95% or more.

The purity of the carbon dioxide recovered by the present embodiment is preferably 90% by volume or more, more preferably 92% by volume or more, further preferably 93% by volume or more, still further preferably 94.0% by volume or more. A higher purity of the carbon dioxide is more preferred when used as a starting material of carbon dioxide gas or dry ice or when compressed for transportation, because the electric power expense and the like can be suppressed.

A higher rate of recovery of the carbon dioxide is more preferred because the amounts of production of the carbon dioxide and the gaseous substance A per starting material are increased and a reduction in cost is achieved. The rate of recovery of the carbon dioxide is preferably 90% or more, more preferably 92% or more, further preferably 93% or more, still further preferably 96% or more.

<Adsorbent>

The adsorbent is preferably one in which the amount of carbon dioxide adsorption under a partial pressure condition of carbon dioxide during mixed gas introduction in the adsorption step is large and carbon dioxide is not more adsorbed even by introduction of carbon dioxide at a higher partial pressure. Since the concentration of carbon dioxide contained in exhaust gas and the highest concentration of carbon dioxide contained in biogas are often 40% by volume, the amount $V_1$ of adsorption at a carbon dioxide partial pressure of 40 kPa is more preferably larger. The amount $V_1$ of adsorption is preferably 10 cc/g or more, more preferably 15 cc/g or more, further preferably 20 cc/g or more. A porous body such as zeolite adsorbs an adsorption substance in a fine pore in a crystal thereof and therefore is more expanded as the amount of adsorption is larger. Accordingly, when saturated adsorption is performed, namely, when the difference between the amount $V_2$ of adsorption at a carbon dioxide partial pressure of 100 kPa and $V_1$, $V_2 - V_1$, is small, the amount of adsorption of the carbon dioxide adsorbed during the cleaning step after the adsorption step is smaller. When $V_2 - V_1$ is small, not only the amount of carbon dioxide used for cleaning can be decreased and the electric power cost and the like for carbon dioxide recovery can be saved, but also expansion of the adsorbent by carbon dioxide adsorption can be reduced. The $V_2 - V_1$, which is changed with, for example, the amount of a carrier in the case of dilution, thus can be normalized with division by $V_1$. In other words, when the $(V_2 - V_1)/V_1$ is in a preferred range, not only the amount of the carbon dioxide necessary in the cleaning step can be decreased, but also expansion during cleaning can be suppressed, and therefore the adsorbent, even if the material thereof is brittle, can be reduced in flawing/cracking and powdering and separation and recovery of carbon dioxide is made possible without any reduction in durability of the adsorbent. Even when the $(V_2 - V_1)/V_1$ is not in a preferred range, not only powdering of the adsorbent can be suppressed, but also the purity of the carbon dioxide recovered can be increased, as long as the amount of carbon dioxide used for cleaning can be increased in a range so that $Q \leq x \times 5.5$ is satisfied.

When an adsorbent satisfying $(V_2 - V_1)/V_1 \leq 0.160$ is used, the rate of recovery of the gaseous substance A, for example, methane can be increased. When an adsorbent exhibiting a larger value of $(V_2 - V_1)/V_1$ exceeding 0.160 is used, there is a tendency that the carbon dioxide introduced for cleaning much adsorbs to such an adsorbent and the gaseous substance A remaining in a space cannot be ejected from the adsorption column and remains in the adsorption column. If a desorption and recovery step of carbon dioxide is performed in such a state, the gaseous substance A is also recovered together with the carbon dioxide and therefore the purity of the carbon dioxide recovered is lowered and the rate of recovery of the gaseous substance A is also dropped.

The $(V_2 - V_1)/V_1$ is preferably 0.160 or less, more preferably 0.155 or less, further preferably 0.150 or less. A porous body having a high adsorption energy is preferably used in order to obtain an adsorbent falling within the above scope. When the adsorption energy is high, adsorption can be made even at a low carbon dioxide partial pressure and the approach to a saturated state of adsorption is more fast achieved, and therefore the amount $V_1$ of adsorption is larger and the amount $V_2$ of adsorption is smaller, thereby providing an adsorbent having a preferred $(V_2 - V_1)/V_1$. Examples of a material having a high carbon dioxide adsorption energy include a hydrophilic zeolite, and examples include an LTA-type zeolite, an FAU-type zeolite, a GIS-type zeolite, and a CHA-type zeolite, in which the ratio of silica and alumina is low.

It has been found that, when the mixed gas is introduced at an increased pressure in the adsorption step and the pressure is higher than the gas pressure in the cleaning step, the carbon dioxide adsorbed to the adsorbent is partially released at the time of dropping of the gas pressure in the adsorption column in the pressure dropping step and therefore an aspect is present where the rate of recovery of the gaseous substance A can be enhanced with $Q \leq x \times 5.5$ being satisfied to suppress powdering, in addition to the adsorbent having a preferred $(V_2 - V_1)/V_1$. In other words, an adsorbent can be used which satisfies $(V_3 - V_2)/V_2 \leq 0.155$ under the assumption that the amount of carbon dioxide adsorption per gram of the adsorbent at a temperature of 35°C and at 200 kPa is $V_3$. The $(V_3 - V_2)/V_2$ represents the slope of the adsorption isotherm of carbon dioxide at a pressure of 100 kPa or more. It is indicated that, as the $(V_3 - V_2)$ is larger, the carbon dioxide released before cleaning is increased and the amount of the carbon dioxide required to be introduced for cleaning can be decreased, whereas a larger $V_3$ means a large maximum amount of carbon dioxide absorption, and leads to an increase in maximum amount of expansion in the adsorption step and an increase in probability of cracking and powdering. Furthermore, as the $(V_3 - V_2)$ is larger, the amount of carbon dioxide adsorption differs between the adsorption step and the cleaning step, namely, the amount of shrinkage is increased, the strain of the adsorbent is increased, and the probability of cracking and powdering is increased. When an adsorbent satisfying $(V_3 - V_2)/V_2 \leq 0.155$ is used, the differences in expansion and shrinkage between the adsorption step and the cleaning step can be reduced and such an adsorbent can be prevented from being powdered. A more preferred $(V_2 - V_1)/V_1$ is 0.150 or less, more preferably 0.140 or less, further preferably 0.135 or less.

The adsorption selectivity of carbon dioxide/gaseous substance A with the adsorbent is preferably 10 or more. The adsorbent thus high in adsorption selectivity of carbon dioxide/gaseous substance A can be used to increase the rate of recovery of the gaseous substance A extracted in the adsorption step once and the purity of the carbon dioxide extracted in the desorption step once.

The adsorption selectivity is defined as q(CO2)/q(GMA) under the assumption that the respective amounts of equilibrium adsorption at 760 mmHg, of the carbon dioxide and the gaseous substance A, obtained by adsorption isotherm measurement are $q(CO_2)$ and q(GMA).

The adsorption selectivity of carbon dioxide/gaseous substance A with the adsorbent is preferably 10 or more, more preferably 15 or more, further preferably 20 or more.

A solid adsorbent is preferably used as the adsorbent. More specific examples of the adsorbent include solid adsorbents such as zeolite, a metal-organic framework (MOF), carbonaceous char, activated carbon, reactivated carbon, carbon black, graphite, silica, silica gel, alumina clay, and metal oxide. In particular, zeolite is preferably used.

Examples of the zeolite include a CHA-type zeolite, a GIS-type zeolite, an FAU-type zeolite, an MWF-type zeolite, and an LTA-type zeolite. In particular, a GIS-type zeolite is preferred.

The GIS-type zeolite preferably contains silica and alumina in a main component. The "main component" is a component occupying 51% by mass or more.

The GIS-type zeolite may contain silica and alumina. The content of aluminum in the GIS-type zeolite is preferably 1% by mass or more, more preferably 3% by mass or more, further preferably 5% by mass or more. The content of silicon in the GIS-type zeolite is preferably 3% by mass or more, more preferably 5% by mass or more. The upper limits of the contents of aluminum and silicon are preferably set so that SAR described below satisfies a predetermined range, and are defined by the value of SAR.

The silica/alumina ratio (which represents the molar ratio of silica and alumina, represented by $SiO_2/Al_2O_3$, and which is hereinafter also referred to as "SAR") in the GIS-type zeolite is preferably 3.40 or more. The GIS-type zeolite exhibits a higher affinity and a stronger adsorption force of a polar molecule like carbon dioxide, as the SAR is lower. A higher SAR is more preferred because a lower SAR causes a so strong adsorption force that energy necessary for desorption by heating or vacuuming is larger. The SAR is more preferably 4.40 or more, further preferably 4.80 or more. The upper limit of the SAR is not particularly limited, a so high SAR causes smaller interaction with an adsorbate, and therefore the SAR is preferably 3000 or less, more preferably 500 or less, further preferably 100 or less.

The content of phosphorus in the GIS-type zeolite is preferably 4% by mass or less. The lower limit of the content of phosphorus is not particularly limited, and may be 0% by mass or more.

The content of Zr in the GIS-type zeolite is preferably 8% by mass or less. The lower limit of the content of Zr is not particularly limited, and may be 0% by mass or more.

The content of Ti in the GIS-type zeolite is preferably 8% by mass or less. The lower limit of the content of Ti is not particularly limited, and may be 0% by mass or more.

The content of a phosphorus atom in the zeolite is more preferably 1.5% by mass or less, especially preferably 0% by mass from the viewpoint of a more enhancement in selective adsorption ability of carbon dioxide.

The respective contents of aluminum, silicon, phosphorus, Zr and Ti can be measured by methods described in Examples below. The respective contents of aluminum, silicon, phosphorus, Zr and Ti can be adjusted within the above ranges by, for example, adjusting the compositional ratio or the like of a mixed gel used for synthesis of the GIS-type zeolite.

The cationic species contained in the GIS-type zeolite is preferably potassium or lithium, more preferably potassium, from the viewpoint of an enhancement in selective adsorption ability of carbon dioxide. The total content of potassium and lithium in the zeolite is calculated as the proportion (Z/T) of the total value (Z) of the molar numbers of potassium and lithium to the total value (T) of the molar numbers of alkali metals in the GIS-type zeolite. The Z/T is preferably 0.05 or more, more preferably 0.10 or more, further preferably 0.15 or more. The upper limit of the Z/T is not particularly limited, and the Z/T may be 1.00 or less. The Z/T can be measured by thermally dissolving the zeolite in an aqueous sodium hydroxide solution or aqua regia and appropriately diluting the resulting solution, and performing ICP-emission spectrochemical analysis with the solution appropriately diluted. The Z/T can be more specifically measured by a method described in Examples below. The Z/T can be adjusted by changing the proportion between potassium and lithium as cationic species of the GIS-type zeolite.

The proportion (K/T) of the total value (K) of the molar number of potassium to the total value (T) of the molar number of each alkali metal in the GIS-type zeolite is preferably 0.05 or more, more preferably 0.10 or more, further preferably 0.15 or more. The upper limit of K/T is not particularly limited, and the K/T may be 1.00 or less.

[Method for producing adsorbent]

(Preparation step)

The GIS-type zeolite can be obtained by, for example, a production method including a preparation step of a mixed gel that contains a silica source containing silicon, an aluminum source containing aluminum, an alkali source containing at least one selected from alkali metal (M1) and alkali earth metal (M2), a salt compound containing at least one selected from alkali metal (M1) and alkali earth metal (M2), a phosphorus source containing phosphorus, an organic structure-directing agent, and water.

(Hydrothermal synthesis step)

The method for producing the GIS-type zeolite preferably further includes a hydrothermal synthesis step in which the hydrothermal synthesis temperature is 80°C to 200°C. The hydrothermal synthesis temperature is preferably 100°C to 180°C. The hydrothermal synthesis is made by retaining the mixed gel obtained in the preparation step at a predetermined temperature for a predetermined time, in a stirring or still standing state. The time of the hydrothermal synthesis is not particularly limited as long as it is a time generally adopted, and is preferably 3 hours to 30 days, more preferably 10 hours to 20 days, further preferably 24 hours to 10 days.

(Separation/drying step)

After the hydrothermal synthesis step, a solid as a product and water are separated. The separation method is not particularly limited and may be a common method, the method here used can be, for example, filtration, decantation, a spray-drying method (rotary spraying, nozzle spraying, ultrasonic atomization, and the like), a drying method with a rotary evaporator, a vacuum-drying method, a freeze-drying method, or a natural drying method, and such separation can be usually made by filtration or decantation.

(Calcining step)

The method for producing the GIS-type zeolite preferably further includes a calcining step in which the calcining temperature is 300°C to 650°C. The calcining temperature is more preferably 350°C to 620°C, further preferably 360°C to 600°C or less. The calcining time may be 0.5 hours to 10 days, 1 hour to 7 days, or 3 hours to 5 days. The calcining atmosphere is not particularly limited as long as it is an atmosphere generally adopted, and an air atmosphere, or an atmosphere to which an inert gas such as nitrogen or argon, or oxygen is added is usually adopted.

(Cation exchange step)

The method for producing the GIS-type zeolite preferably further includes a cation exchange step. The cation exchange can be made with, without limitation to the following, for example, carbonate such as sodium carbonate, potassium carbonate, lithium carbonate, rubidium carbonate, cesium carbonate, magnesium carbonate, calcium carbonate, strontium carbonate, barium carbonate or ammonium carbonate, nitrate such as sodium nitrate, potassium nitrate, lithium nitrate, rubidium nitrate, cesium nitrate, magnesium nitrate, calcium nitrate, strontium nitrate, barium nitrate or ammonium nitrate, a salt obtained by exchanging the carbonate ion or nitrate ion contained in the carbonate or nitrate with a halide ion, a sulfate ion, a carbonate ion, a hydrogen carbonate ion, an acetate ion, a phosphate ion or a hydrogen phosphate ion, or acid such as nitric acid or hydrochloric acid. The cation exchange temperature is not particularly limited as long as it is a common cation exchange temperature, and is usually room temperature to 100°C or less.
The separation method in separation of the zeolite after cation exchange is not particularly limited and may be a common method, the method here used can be, for example, filtration, decantation, a spray-drying method (rotary spraying, nozzle spraying, ultrasonic atomization, and the like), a drying method with a rotary evaporator, a vacuum-drying method, a freeze-drying method, or a natural drying method, and such separation can be usually made by filtration or decantation.

[Gas separation apparatus]

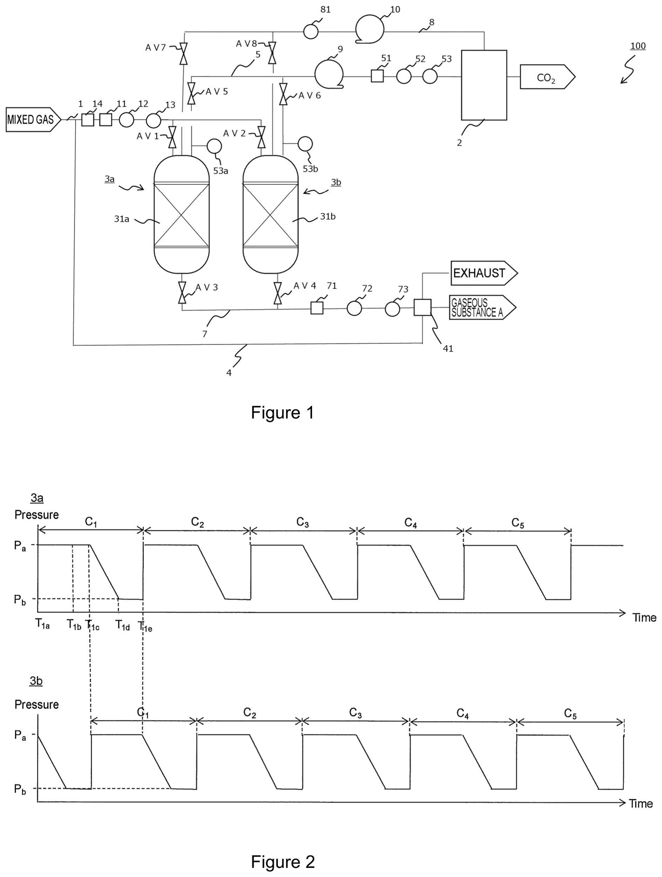

A schematic configuration of a gas separation apparatus 100 according to the first embodiment is described with reference to Figure 1. The gas separation apparatus 100 has a mixed gas supply line 1, a carbon dioxide adsorption column 3a and a carbon dioxide adsorption column 3b, a carbon dioxide recovery line 5, a gaseous substance A recovery line 7, and a pressure reducing apparatus 9.
The carbon dioxide adsorption column 3a has a fixed bed 31a that is configured to be capable of contacting with a mixed gas introduced therein and that is packed with an adsorbent. The carbon dioxide adsorption column 3a is connected to the mixed gas supply line 1 at one end thereof and is connected to the gaseous substance A recovery line 7 at other end thereof. The gaseous substance A recovery line 7 is provided with an automatic valve AV3. The gaseous substance A recovery line 7 is also provided with a flow meter 71, a moisture meter 72 and a component analyzer 73. The component analyzer used here may be one capable of measuring the concentration of carbon dioxide and the concentration of a gaseous substance A.
The carbon dioxide adsorption column 3a is connected to the carbon dioxide recovery line 5 at an end portion thereof in the same direction as the direction of an end portion thereof at which the column is connected to the mixed gas supply line 1. The mixed gas supply line 1 is provided with blower 14, a flow meter 11, a moisture meter 12 and a component analyzer 13. The blower 14 may be a compression pump when the mixed gas in a pressurized state is sent into the adsorption column. The carbon dioxide adsorption column 3a is provided with an automatic valve AV1 at an inlet thereof. On the other hand, the pressure reducing apparatus 9 is connected to the carbon dioxide recovery line 5, and is configured to be capable of reducing the pressure in the carbon dioxide adsorption column 3a. The pressure reducing apparatus 9 may be here a vacuum pump. The carbon dioxide recovery line 5 connected to the carbon dioxide adsorption column 3a is provided with an automatic valve AV5 and a manometer 53a. Furthermore, the carbon dioxide recovery line 5 is provided with a flow meter 51, a moisture meter 52 and a component analyzer 53.

The carbon dioxide adsorption column 3b has a fixed bed 31b that is configured to be capable of contacting with a mixed gas introduced therein and that includes an adsorbent. The carbon dioxide adsorption column 3b is provided with an automatic valve AV2 at an inlet thereof. The carbon dioxide adsorption column 3b is connected to the mixed gas supply line 1 at one end thereof and is connected to the gaseous substance A recovery line 7 at other end thereof. The carbon dioxide adsorption column 3b is also connected to the carbon dioxide recovery line 5 at an end portion thereof in the same direction as the direction of an end portion thereof at which the column is connected to the mixed gas supply line 1. The carbon dioxide recovery line 5 connected to the carbon dioxide adsorption column 3b is provided with an automatic valve AV6 and a manometer 53b.

The carbon dioxide recovery line 5 is connected to the carbon dioxide tank 2, in which high-purity carbon dioxide separated and recovered can be temporarily preserved. When such temporary preservation is not performed, atmospheric relief may be directly made without the carbon dioxide tank 2 provided, and a facility for incineration treatment of the remaining combustible gas may be connected. The carbon dioxide tank 2, to which a purge line 8 is connected and furthermore a blower 10 and a flow meter 81 are connected, is configured so that the carbon dioxide temporarily stored in the carbon dioxide tank 2 can be allowed to flow to the carbon dioxide adsorption columns 3a and 3b to perform the cleaning step. The blower 10 is unnecessary when cleaning is performed with the exhaust pressure of the vacuum pump used in the pressure reducing apparatus 9. Use of the exhaust pressure is economically preferred because the facility cost and the electric power of the blower are saved. The exhaust pressure of the pressure reducing apparatus 9, when connection to the carbon dioxide tank 2 or a pipe 8 is made, can thus introduce carbon dioxide into the adsorption column in the cleaning step without the blower 10. A line connected to the carbon dioxide adsorption column 3a is provided with an automatic valve AV7 and a line connected to the carbon dioxide adsorption column 3b is provided with an automatic valve AV8, and the adsorption column to be cleaned can be switched.

Next, the action of the gas separation apparatus 100 according to the present embodiment is described with reference to Figure 1. The mixed gas is supplied to the carbon dioxide adsorption column 3a via the mixed gas supply line 1. Then, carbon dioxide ($CO_2$) contained in the mixed gas is adsorbed by the adsorbent packed in the carbon dioxide adsorption column 3a, and a gaseous substance A such as methane ($CH_4$) is recovered from the gaseous substance A recovery line 7. In other words, the adsorption step of introducing the mixed gas into the carbon dioxide adsorption column 3a and adsorbing carbon dioxide to the adsorbent to extract the gaseous substance A is performed in the adsorption column.

Carbon dioxide is supplied via the purge line 8 to the carbon dioxide adsorption column 3a incorporating the adsorbent where carbon dioxide is adsorbed, from the carbon dioxide tank 2. Thus, not only the gas containing a large amount of a gaseous substance A such as methane remaining in the adsorption column is pushed out to the gaseous substance A recovery line 7, but also the gaseous substance A adsorbed to the adsorbent is replaced with carbon dioxide and the gaseous substance is desorbed and pushed out, resulting in an enhancement in the rate of recovery of the gaseous substance A. The opening and closing of the automatic valves AV7 and AV8 for switching of the adsorption column to be cleaned and for initiation and termination of cleaning may be controlled so as to be performed once the carbon dioxide concentration in the adsorption column to be cleaned and the amount of gas introduced in cleaning, as well as the gaseous substance A concentration and the carbon dioxide concentration in the gas containing a large amount of the gaseous substance A pushed out by cleaning are certain values, or may be performed with time control. Such time control is preferably performed because sensors can be decreased, the facility cost can be reduced, and control high in readiness is made possible.

The carbon dioxide adsorption column 3a incorporating the adsorbent in which carbon dioxide is adsorbed is subjected to exhaust of carbon dioxide under reduced pressure by the pressure reducing apparatus 9, and thus not only the adsorbent in the carbon dioxide adsorption column 3a is recycled, but also carbon dioxide purified is extracted. In other words, carbon dioxide is exhausted under reduced pressure from the adsorption column, and thus the carbon dioxide desorption step of extracting the carbon dioxide is performed.

Carbon dioxide adsorption by introduction of the mixed gas and carbon dioxide desorption by a reduction in pressure are repeatedly performed in the carbon dioxide adsorption column 3a and the carbon dioxide adsorption column 3b, as described above. The cleaning step is then performed by introducing the mixed gas into the carbon dioxide adsorption column 3b to allow carbon dioxide to be adsorbed during desorption of carbon dioxide with the carbon dioxide adsorption column 3a. After the completion of desorption of carbon dioxide in the carbon dioxide adsorption column 3a, the mixed gas is again introduced into the carbon dioxide adsorption column 3a, and carbon dioxide is desorbed in the carbon dioxide adsorption column 3b that is under reduced pressure, to repeat adsorption/desorption of carbon dioxide in each of the columns, thereby allowing for continuous treatment of the mixed gas.

More specifically, the action can be made according to the following procedure. Figure 2 is a conceptual diagram showing the respective changes of pressure variations over time, of the carbon dioxide adsorption column 3a and the carbon dioxide adsorption column 3b by the action of the gas separation apparatus 100. The automatic valves AV1 and AV3, among the automatic valves AV1 to AV8 that are all in a closed state, are opened at a time $T_{1a}$ in Figure 2, to supply the mixed gas to the carbon dioxide adsorption column 3a at an adsorption pressure $P_a$ (for example, 105 kPa) with checking by the flow meter 11 so that a predetermined flow rate is achieved in the mixed gas supply line 1. When the carbon dioxide concentration exceeds 5% by volume in the component analyzer 73 (for example, a time $T_{1b}$ in Figure 2), the automatic valve AV1 is closed and at the same time the automatic valve AV7 is opened to supply carbon dioxide from the carbon dioxide tank 2 and clean the carbon dioxide adsorption column 3a. When the carbon dioxide concentration exceeds 8% by volume in the component analyzer 73 (for example, a time $T_{1c}$ in Figure 2), the automatic valve AV7 and the automatic valve AV3 may be closed and at the same time the automatic valve AV2 and the automatic valve AV4 may be opened to switch supply of the mixed gas to the carbon dioxide adsorption column 3a to such supply to the carbon dioxide adsorption column 3b. The carbon dioxide adsorption column 3a is reduced in pressure by the pressure reducing apparatus 9 with opening of the automatic valve AV5 in a closed state of the automatic valve AV3, resulting in a reduction in pressure in the carbon dioxide adsorption column 3a, and the pressure in the carbon dioxide adsorption column is an ultimate pressure $P_b$ (for example, 2 kPa) to perform the desorption operation, resulting in recovery of carbon dioxide from the carbon dioxide adsorption column 3a. The arrival time at which the ultimate pressure $P_b$ is achieved is defined as $T_{1d}$. Carbon dioxide adsorbed by the adsorbent in the carbon dioxide adsorption column 3a is desorbed and thus not only carbon dioxide is recovered, but also the adsorbent is recycled.

Subsequently, when the carbon dioxide concentration of gas flowing out from the carbon dioxide adsorption column 3b exceeds 5% by volume in the component analyzer 73, the automatic valve AV2 is closed and at the same time the automatic valve AV8 is opened to supply carbon dioxide from the carbon dioxide tank 2 and clean the carbon dioxide adsorption column 3b. When the carbon dioxide concentration exceeds 8% by volume in the component analyzer 73, the automatic valve AV8 and the automatic valve AV4 may be closed and at the same time the automatic valve AV1 and the automatic valve AV3 may be opened to switch supply of the mixed gas to the carbon dioxide adsorption column 3b to such supply to the column 3a (the time is defined as $T_{1e}$). The carbon dioxide adsorption column 3b is reduced in pressure by the pressure reducing apparatus 9 with opening of the automatic valve AV6, and thus the pressure in the carbon dioxide adsorption column 3b is 2 kPa to perform the desorption operation, resulting in recovery of carbon dioxide from the carbon dioxide adsorption column 3b. A series of actions from the times $T_{1a}$ to $T_{1e}$ as shown above corresponds to the action of one cycle $C_1$ of the pressure variation in the carbon dioxide adsorption column 3a. One cycle $C_1$ of the pressure variation includes the adsorption step once and the desorption step once. The same action may be repeated to repeatedly perform the second cycle $C_2$ and the third cycle $C_3$ of the pressure variation, and the adsorption step and the desorption step.

The gas separation apparatus 100 may be applied to, for example, purification of an industrial exhaust gas containing carbon dioxide, biogas obtained by fermentation of organic substances, or the like. In particular, the apparatus is particularly suitably used in purification of biogas.

[Biogas purification system 1000; application example to biogas purification]

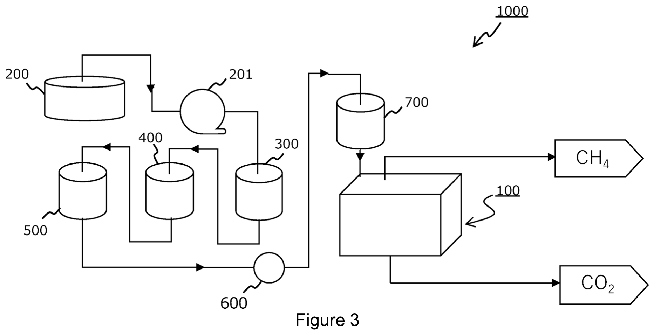

Figure 3 is a diagram showing a schematic configuration of a biogas purification system 1000 in which the gas separation apparatus 100 is applied to biogas purification. As an application example to biogas purification, an example is shown in which methane and carbon dioxide in a main components of biogas are separated and recovered. In the case of biogas purification, the gaseous substance A is usually methane ($CH_4$).

The biogas purification system 1000 of the present embodiment includes a fermenter 200, a desulfurization column 300, a siloxane removal apparatus 400, an oxygen removal apparatus 500, a cooling apparatus 600, a dehydration apparatus 700, and a gas separation apparatus 100.

The fermenter 200 is a tank that generates biogas (hereinafter, also referred to as "mixed gas") by fermenting sewage sludge generated from sewage treatment plants, food residues generated from food factories or restaurants, or urine and feces generated from cattle farmers or the like, in an anaerobic condition. The fermenter 200 is connected to the desulfurization column 300 so as to enable the biogas generated to be supplied.

The fermenter 200 may be connected to the desulfurization column 300 before introduction of the biogas to the gas separation apparatus 100. The desulfurization column 300 is an adsorption column for removal of hydrogen sulfide contained in the biogas. Examples of a desulfurization agent packed in the desulfurization column 300 include iron oxide. Iron oxide reacts with hydrogen sulfide contained in the biogas to generate iron sulfide.

The fermenter 200 may be connected to the siloxane removal apparatus 400 before introduction of the biogas to the gas separation apparatus 100. The siloxane removal apparatus 400 removes siloxane contained in the biogas. This siloxane is a silicon oxide-containing substance contained in sewage sludge.

The fermenter 200 may be connected to the oxygen removal apparatus 500 before introduction of the biogas to the gas separation apparatus 100. The oxygen removal apparatus 500 removes oxygen contained in the biogas. This oxygen can be removed to safely transport methane gas after purification.

The fermenter 200 may be connected to the cooling apparatus 600 before introduction of the biogas to the gas separation apparatus 100. The cooling apparatus 600 cools the biogas supplied, to remove moisture contained in the biogas. Thus, the dew point of the biogas is decreased. The cooling apparatus 600 here used can be, for example, a water-cooling type cooler, an air-cooling type cooler, or an electric cooler.

The fermenter 200 may be connected to the dehydration apparatus 700 before introduction of the biogas to the gas separation apparatus 100. The dehydration apparatus 700 further removes moisture from the biogas from which moisture is removed by the cooling apparatus 600. Thus, the dew point of the biogas can be further decreased. The dehydration apparatus 700 here used can be, for example, an apparatus packed with a dehydration agent.

Next, the action of the biogas purification system 1000 of the present embodiment is described with reference to Figure 3.

First, biogas is generated by fermenting sewage sludge generated from sewage treatment plants, food residues generated from food factories or restaurants, or urine and feces generated from cattle farmers or the like, in an anaerobic condition in the fermenter 200. The biogas at this stage contains hydrogen sulfide, moisture, and the like.

The biogas generated in the fermenter 200 is sent to the desulfurization column 300. The desulfurization column 300 removes hydrogen sulfide so that the concentration of hydrogen sulfide contained in the biogas is at a level of about several parts per million by volume. The fermenter 200 is connected to a blower 201 in order to enable the biogas generated to be supplied to other apparatus.

Thereafter, the biogas from which hydrogen sulfide is removed is sent to the siloxane removal apparatus 400. The siloxane removal apparatus 400 removes siloxane so that the concentration of siloxane contained in the biogas is at a level of about several milligrams/$Nm^3$.

Thereafter, the biogas from which siloxane is removed is sent to the oxygen removal apparatus 500. The oxygen removal apparatus 500 removes oxygen so that the concentration of oxygen contained in the biogas is at a level of about several parts per million by volume.

Next, the biogas is sent to the cooling apparatus 600. The cooling apparatus 600 cools the biogas to remove moisture contained in the biogas, thereby decreasing the dew point of the biogas. Thereafter, the biogas is sent to the dehydration apparatus 700. The dehydration apparatus 700 further removes moisture in the biogas, and the amount of moisture is reduced to 1000 ppm by volume or less.

The biogas from which hydrogen sulfide, siloxane, and moisture are removed is sent to the gas separation apparatus 100. The action of the gas separation apparatus 100 is as shown with respect to that of the above gas separation apparatus.

According to the gas separation method of the present embodiment, an adsorption step of introducing a mixed gas into an adsorption column to allow carbon dioxide to be adsorbed onto an adsorbent and to extract a gaseous substance A, thereafter, a cleaning step of introducing carbon dioxide into the adsorption column to discharge the gaseous substance A in the adsorption column and to clean the adsorption column, and a carbon dioxide desorption step of exhausting carbon dioxide under reduced pressure from the adsorption column, to extract the carbon dioxide can be performed. Thus, high-purity methane and high-purity carbon dioxide can be efficiently recovered. According to the gas separation method of the present embodiment, the problem of clogging or the like due to powdering of the adsorbent is hardly caused and the amount of carbon dioxide used for cleaning can also be reduced, and thus the recovery cost can be suppressed.

**Examples**

Hereinafter, the present embodiment is more specifically described with reference to Examples and the like, but these Examples are illustrative and the present embodiment is not limited to the following Examples.

< Measurement of amount of carbon dioxide adsorption ($V_1$, $V_2$)>

The amount of carbon dioxide adsorption was determined by the following procedure.

(1) An adsorbent was placed in an amount of 0.2 g, into a 12-mm cell (manufactured by Micromeritics Instrument Corporation).

(2) Such a sample placed in the cell of (1) above was disposed on a gas adsorption measurement apparatus "3-Flex" (trade name) manufactured by Micromeritics Instrument Corporation, and subjected to heating/vacuum degassing treatment at 250°C and 0.001 mmHg or less for 12 hours.

(3) The sample placed in the cell of (2) above was placed in constant-temperature circulation water at 25°C, and measurement with liquefied carbon dioxide (manufactured by Sumitomo Seika Chemicals Co., Ltd., purity: 99.9% by mass by volume or more) was performed at an absolute pressure of 0.03 to 100 kPa after the temperature of the sample reached 25 $\pm$ 0.2°C. The pressure was here measured over time during the measurement, and it was determined that a saturated amount of adsorption was achieved when the pressure variation reached 0.001% by volume/10 sec or less. The $(V_2 - V_1)/V_1$ was determined under the assumption that the amount of carbon dioxide adsorption at 40 kPa was $V_1$ (cc/g) and the amount of carbon dioxide adsorption at 100 kPa was $V_2$ (cc/g).

The gas as a second component was again subjected to measurement at an absolute pressure of 0.03 to 100 kPa by use of a gas having a purity of 99.9% by mass by volume or more. The adsorption selectivity was defined as q(CO2)/q(GMA) under the assumption that the respective amounts of equilibrium adsorption (cc/g) at 100 kPa, of carbon dioxide and the gaseous substance A, obtained by adsorption isotherm measurement were q(CO2) and q(GMA).

<Measurement of amount of carbon dioxide adsorption ($V_3$)>

The amount of carbon dioxide adsorption under pressure was determined by the following procedure.

(1) An adsorbent was placed in an amount of 0.2 g, into a 12-mm cell (manufactured by Micromeritics Instrument Corporation).
(2) Such a sample placed in the cell of (1) above was disposed on a gas adsorption measurement apparatus "BELSORP-HP" (trade name), and subjected to heating/vacuum degassing treatment at 250°C and 0.001 mmHg or less for 12 hours.
(3) The sample placed in the cell of (2) above was placed in constant-temperature circulation water at 25°C, and measurement with liquefied carbon dioxide (manufactured by Sumitomo Seika Chemicals Co., Ltd., purity: 99.9% by mass by volume or more) was performed at an absolute pressure of 0.03 to 300 kPa after the temperature of the sample reached 25 $\pm$ 0.2°C. The pressure was here measured over time during the measurement, and it was determined that a saturated amount of adsorption was achieved when the pressure variation reached 0.001% by volume/10 sec or less. The $(V_3 - V_2)/V_2$ was determined with the amount of carbon dioxide adsorption $V_2$ (cc/g) at 100 kPa, determined by the above method, under the assumption that the amount of carbon dioxide adsorption at 200 kPa was $V_3$ (cc/g).

<X-ray diffraction; crystal structure analysis>

X-ray diffraction was performed by the following procedure.

(1) A zeolite (dry product) obtained in each Production Example was adopted as a sample, and pulverized by an agate mortar. Furthermore, 10% by mass of crystalline silicon (manufactured by Rare Metallic Co., Ltd.) was added, and mixed in the agate mortar until a uniform system was obtained, to provide a sample for structure analysis.
(2) The sample of (1) above was uniformly fixed on a non-reflective sample plate for powders, and crystal structure analysis was performed by X-ray diffraction in the following conditions.

X-ray diffraction apparatus (XRD): powder X-ray diffraction apparatus "RINT2500 model" (trade name) manufactured by Rigaku Corporation
X-ray source: Cu bulb tube (40 kV, 200 mA)
Measurement temperature : 25°C
Measurement range: 5 to 60° (0.02°/step)
Measurement speed: 0.2°/min
Slit widths (scattering, diffusion, light-receiving): 1°, 1°, 0.15 mm

<$^{29}$Si-MAS-NMR spectrum and measurement of SAR>

The SAR of a zeolite in a zeolite molded article can be measured by measurement of $^{29}$Si-MAS-NMR. First, water was put on the bottom of a desiccator, for humidity conditioning of a zeolite, and a zeolite placed in a sample tube was retained thereon for 48 hours. After humidity conditioning treatment, $^{29}$Si-MAS-NMR measurement was performed under the following conditions.

Apparatus: JEOL RESONANCE ECA700

Magnetic field intensity: 16.44 T ($^1$H resonant frequency 700 MHz)

Measurement nucleus: $^{29}$Si

Resonant frequency :139.08 MHz

NMR tube: 4 mmφ (rotor made of zirconia)

Measurement method: DD/MAS (dipolar decoupling magic angle spinning)

Pulse width: 45°

Waiting time: 50 sec

Cumulated number: 800 (measurement time; about 22 hours)

MAS: 10,000 Hz

Chemical shift reference: silicone rubber (-22.34 ppm), external reference

A molded article including a GIS-type zeolite shows the following five peaks in a $^{29}$Si-MAS-NMR spectrum.

(1) Q4(0Al): peak assigned to Si not bound with any Al via oxygen

(2) Q4(1Al): peak assigned to Si bound with one Al atom via oxygen

(3) Q4(2Al): peak assigned to Si bound with two Al atoms via oxygen

(4) Q4(3Al): peak assigned to Si bound with three Al atoms via oxygen

(5) Q4(4Al): peak assigned to Si bound with four Al atoms via oxygen

The peak positions in a $^{29}$Si-MAS-NMR spectrum are generally present at - 112 ppm to -80 ppm, and can be assigned to Q4(0Al), Q4(1Al), Q4(2Al), Q4(3Al), and Q4(4Al) from the high magnetic field side. While the peak positions can be changed depending on cationic species present in a zeolite backbone, the peak positions are generally present in the following ranges.

(1) Q4(0Al): -105 ppm to -112 ppm

(2) Q4(1Al): -100 ppm to -105 ppm

(3) Q4(2Al): -95 ppm to -100 ppm

(4) Q4(3Al): -87 ppm to -95 ppm

(5) Q4(4Al): -80 ppm to -87 ppm

The area intensities of the peaks in a $^{29}$Si-MAS-NMR spectrum are obtained by analysis with Gauss and Lorenz functions by use of analysis program dmfit (#202000113 version), and optimization calculation of four parameters of the amplitude (the height of the maximum value in the spectrum), the position (each position in the spectrum, ppm), the width (the full width at half maximum in the spectrum, ppm), and the Gauss/Lorenz ratio (xG/(1 - x)L), according to the algorithm of the least squares method. When the areas of the respective peaks of Q4(0Al), Q4(1Al), Q4(2Al), Q4(3Al), and Q4(4Al),

thus determined, are designated as A_Q4(0AI), A_Q4(1AI), A_Q4(2AI), A_Q4(3AI), and A_Q4(4AI), and the total value of A_Q4(0AI), A_Q4(1AI), A_Q4(2AI), A_Q4(3AI), and A_Q4(4AI) is designated as A_total, the SAR can be determined according to the following.

SAR = 100/[A_Q4(1AI)/4 + 2 × A_Q4(2AI)/4 + 3 × A_Q4(3AI)/4 + 4 × A_Q4(4AI)/4] × 2

<Evaluation of rate of powdering of adsorbent>

After separation and recovery of carbon dioxide and methane were carried out, a zeolite molded article used as the adsorbent was recovered and the rate of powdering was measured. The rate of powdering was evaluated by the following procedure.

(1) Before separation and recovery of carbon dioxide, 100 g of the zeolite molded article was weighed, the shorter diameter of the zeolite molded article was measured, and the average value of the shorter diameter of the zeolite molded article was defined as ds.
(2) A sieve having an aperture smaller than ds and having the largest aperture was selected and prepared from those having apertures published in JISZ8801-1.
(3) The mass $W_1$ of the zeolite molded article packed in the adsorption column was measured.
(4) The whole zeolite molded article after separation and recovery of carbon dioxide and methane were carried out was recovered, and then applied to the sieve, to recover the zeolite molded article passing through the sieve, and the mass $W_2$ of the zeolite molded article passing through the sieve was measured.
(5) The value calculated by assigning the mass $W_1$ of the zeolite molded article packed in the adsorption column, to measurement expression (1), was defined as the rate of powdering [% by mass] of the zeolite molded article, and it was determined that, as the rate of powdering was lower, the gas separation method could be carried out with suppression of powdering of the adsorbent. Since a powder somewhat occurred during packing and recovery, a value of 0.5 [% by mass] or less was evaluated to correspond to achievement of a sufficient effect of powdering suppression.

$$\text{Rate of powdering [\% by mass]} = (W_2 \text{ [g]})/(W_1 \text{ [g]}) \times 100 \ ... \ \text{Expression (1)}$$

The reason why the acceptance line of the rate of powdering was determined to be 0.5 [% by mass] or less was because it was experimentally confirmed that a powder formed could less cause clogging of the adsorption column and/or the pipe, and/or breakdown of the pump, could also be sufficiently collected by a filter or the like, and had no effect on any biogas purification apparatus.

Production Example 1: method for producing GIS-type zeolite molded article

A mixed gel was prepared by mixing 61.93 g of water, 0.403 g of sodium hydroxide (NaOH, manufactured by FUJIFILM Wako Pure Chemical Corporation), 3.39 g of sodium nitrate (NaNO$_3$, manufactured by FUJIFILM Wako Pure Chemical Corporation), 1.64 g of sodium aluminate (NaAlO$_2$, manufactured by FUJIFILM Wako Pure Chemical Corporation) and 10.82 g of colloidal silica (Ludox AS-40, solid concentration 40% by mass, manufactured by W.R. Grace & Co.), and stirring them for 30 minutes. The composition of the mixed gel was as follows: $\alpha = SiO_2/Al_2O_3 = 7.21$, $\beta = Na_2O/Al_2O_3 = 3.47$, $\gamma = P_2O_5/Al_2O_3 = 0.00$, $\delta = H_2O/Al_2O_3 = 380.1$, $\varepsilon = H_2O/OH^- = 377.3$, $\zeta = R/Al_2O_3 = 0.00$. The mixed gel was loaded to a 200-mL stainless microbomb (manufactured by HIRO Company) including an inner cylinder of fluororesin, and hydrothermal synthesis was performed by a stirring-type constant-temperature bath (manufactured by HIRO Company) rotatable in the vertical direction of the microbomb, at a stirring rate of 30 rpm and 135°C for 4 days. After a product was subjected to filtration and dried at 120°C, a powdery zeolite was obtained. One g of the zeolite obtained was placed in 500 mL of an aqueous 0.05 N potassium carbonate solution adjusted with potassium carbonate (K$_2$CO$_3$, manufactured by Nippon Soda Co., Ltd.), and stirred at room temperature and 500 rpm for 3 hours. A product was subjected to filtration and dried at 120°C, and a powdery zeolite was obtained in which a cation was partially exchanged with potassium. It was confirmed from an XRD spectrum that the zeolite obtained was a GIS-type zeolite. Furthermore, the zeolite was evaluated to be a high-purity GIS-type zeolite because no peaks assigned to any other zeolite, amorphous silica/alumina, and the like were observed. The ratio of silica and alumina in the zeolite obtained was calculated with a $^{29}$Si-MAS-NMR spectrum, and as a result, SAR = 6.90 was satisfied.

Forty parts by mass of a powder of the GIS-type zeolite, 1.2 parts by mass of methylcellulose (Serander YB-132A manufactured by Highchem Co., Ltd.), 0.2 parts by mass of polyvinyl alcohol (Gohsenol N-300 manufactured by Mitsubishi Chemical Corporation), and 48.2 parts by mass of alumina sol (manufactured by Nissan Chemical Corporation, content rate of alumina: 10.5% by mass) were used, and mixed with 10.4 parts by mass of a powdery alumina hydrate. The above mixture was extruded into a columnar shape having a diameter of 3 mm by a wet extrusion granulator MG-55 (manufactured by Dalton Corporation), and then calcined with an electric furnace in an air atmosphere at 350°C for 24 hours, thereby producing a GIS-type zeolite molded article.

The adsorption isotherms of $CO_2$ and $CH_4$ of the GIS-type zeolite molded article obtained were measured, and the amount $V_1$ of adsorption was 42.4 cc/g, the amount $V_2$ of adsorption was 46.9 cc/g, and the amount $V_3$ of adsorption was 47.1 cc/g. In addition, $(V_2 - V_1)/V_1 = 0.106$ and $(V_3 - V_2)/V_2 = 0.004$ were satisfied. The respective amounts of adsorption of $CO_2$ and $CH_4$ at 100 kPa were as follows: $CO_2$: 46.9 $cm^3$/g and $CH_4$: 3.5 $cm^3$/g; the adsorption selectivity ($CO_2$/$CH_4$) was 13.4, and the above zeolite molded article was confirmed to have sufficient performance for the adsorbent.

Production Example 2: method for producing GIS-type zeolite molded article

A zeolite molded article was obtained by the same method as in Production Example 1 except that the calcining temperature and time of the GIS-type zeolite molded article were respectively 570°C and 32 hours. The adsorption isotherm of $CO_2$ of the GIS-type zeolite obtained was measured, and the amount $V_1$ of adsorption was 35.6 cc/g, the amount $V_2$ of adsorption was 41.2 cc/g, and the amount $V_3$ of adsorption was 47.1 cc/g. In addition, $(V_2 - V_1)/V_1 = 0.157$ and $(V_3 - V_2)/V_2 = 0.143$ were satisfied. The respective amounts of adsorption of $CO_2$ and $CH_4$ at 100 kPa were as follows: $CO_2$: 41.2 $cm^3$/g and $CH_4$: 3.1 $cm^3$/g; the adsorption selectivity ($CO_2$/$CH_4$) was 13.3, and the above zeolite molded article was confirmed to have sufficient performance for the adsorbent.

Production Example 3: method for producing GIS-type zeolite molded article

A zeolite molded article was obtained by the same method as in Production Example 1 except that the calcining temperature and time of the GIS-type zeolite molded article were respectively 600°C and 32 hours. The adsorption isotherm of $CO_2$ of the GIS-type zeolite obtained was measured, and the amount $V_1$ of adsorption was 34.0 cc/g, the amount $V_2$ of adsorption was 39.7 cc/g, and the amount $V_3$ of adsorption was 46.1 cc/g. In addition, $(V_2 - V_1)/V_1 = 0.168$ and $(V_3 - V_2)/V_2 = 0.161$ were satisfied. The respective amounts of adsorption of $CO_2$ and $CH_4$ at 100 kPa were as follows: $CO_2$: 39.7 $cm^3$/g and $CH_4$: 3.0 $cm^3$/g; the adsorption selectivity ($CO_2$/$CH_4$) was 13.2, and the above zeolite molded article was confirmed to have sufficient performance for the adsorbent.

Production Example 4: method for producing GIS-type zeolite molded article

A mixed gel was prepared by mixing 62.20 g of water, 0.35 g of sodium hydroxide (NaOH, manufactured by FUJIFILM Wako Pure Chemical Corporation), 5.20 g of sodium sulfate ($Na_2SO_4$, manufactured by FUJIFILM Wako Pure Chemical Corporation), 1.6 g of sodium aluminate ($NaAlO_2$, manufactured by FUJIFILM Wako Pure Chemical Corporation), and 11.50 g of colloidal silica (Ludox AS-40, solid concentration 40% by mass, manufactured by W.R. Grace & Co.), and stirring them for 30 minutes. The composition of the mixed gel was as follows: $\alpha = SiO_2/Al_2O_3 = 8.98$, $\beta = Na_2O/Al_2O_2 = 5.80$, $\gamma = P_2O_5/Al_2O_3 = 0.00$, $\delta = H_2O/Al_2O_3 = 449.7$, $\varepsilon = H_2O/OH^- = 438.7$, $\zeta = R/Al_2O_2 = 0.00$. The mixed gel was loaded to a 200-mL stainless microbomb (manufactured by HIRO Company) including an inner cylinder of fluororesin, and hydrothermal synthesis was performed by a stirring-type constant-temperature bath (manufactured by HIRO Company) rotatable in the vertical direction of the microbomb, at a stirring rate of 30 rpm and 135°C for 4 days. After a product was subjected to filtration and dried at 120°C, a powdery zeolite was obtained. One g of the zeolite obtained was placed in 500 mL of an aqueous 0.05 N potassium carbonate solution adjusted with potassium carbonate ($K_2CO_3$, manufactured by Nippon Soda Co., Ltd.), and stirred at room temperature and 500 rpm for 3 hours. A product was subjected to filtration and dried at 120°C, and a powdery zeolite was obtained in which a cation was partially exchanged with potassium. It was confirmed from an XRD spectrum that the zeolite obtained was a GIS-type zeolite. Furthermore, the zeolite was evaluated to be a high-purity GIS-type zeolite because no peaks assigned to any other zeolite, amorphous silica/alumina, and the like were observed. The ratio of silica and alumina in the zeolite obtained was calculated with a $^{29}$Si-MAS-NMR spectrum, and as a result, SAR = 7.15 was satisfied.

Forty parts by mass of a powder of the GIS-type zeolite, 1.2 parts by mass of methylcellulose (Serander YB-132A manufactured by Highchem Co., Ltd.), 0.2 parts by mass of polyvinyl alcohol (Gohsenol N-300 manufactured by Mitsubishi Chemical Corporation), and 48.2 parts by mass of alumina sol (manufactured by Nissan Chemical Corporation, content rate of alumina: 10.5% by mass) were used, and mixed with 10.4 parts by mass of a powdery alumina hydrate. The above mixture was extruded into a columnar shape having a diameter of 3 mm by a wet extrusion granulator MG-55 (manufactured by Dalton Corporation), and then calcined with an electric furnace in an air atmosphere at 375°C for 24 hours, thereby producing a GIS-type zeolite molded article.

The adsorption isotherms of $CO_2$ and $CH_4$ of the GIS-type zeolite molded article obtained were measured, and the amount $V_1$ of adsorption was 35.0 cc/g, the amount $V_2$ of adsorption was 40.5 cc/g, and the amount $V_3$ of adsorption was 47.2 cc/g. In addition, $(V_2 - V_1)/V_1 = 0.157$ and $(V_3 - V_2)/V_2 = 0.165$ were satisfied. The respective amounts of

adsorption of $CO_2$ and $CH_4$ at 100 kPa were as follows: $CO_2$: 40.5 $cm^3$/g and $CH_4$: 3.4 $cm^3$/g; the adsorption selectivity ($CO_2$/$CH_4$) was 11.9, and the above zeolite molded article was confirmed to have sufficient performance for the adsorbent.

Production Example 5: method for producing GIS-type zeolite molded article

A zeolite molded article was obtained by the same method as in Production Example 4 except that the calcining temperature and time of the GIS-type zeolite molded article were respectively 580°C and 30 hours. The adsorption isotherm of $CO_2$ of the GIS-type zeolite molded article was measured, and the amount $V_1$ of adsorption was 33.1 cc/g, the amount $V_2$ of adsorption was 39.3 cc/g, and the amount $V_3$ of adsorption was 44.5 cc/g. In addition, $(V_2 - V_1)/V_1 = 0.187$ and $(V_3 - V_2)/V_2 = 0.132$ were satisfied. The respective amounts of adsorption of $CO_2$ and $CH_4$ at 100 kPa were as follows: $CO_2$: 39.3 $cm^3$/g and $CH_4$: 3.3 $cm^3$/g; the adsorption selectivity ($CO_2$/$CH_4$) was 11.9, and the above zeolite molded article was confirmed to have sufficient performance for the adsorbent.

Example 1: gas separation method

A gas separation apparatus shown in FIG. 1 was used to separate a mixed gas including methane and carbon dioxide, thereby performing separation and recovery of gas 1 (methane) and gas 2 (carbon dioxide).
Each of the volumes of the carbon dioxide adsorption columns 3a and 3b was 1 L, and the carbon dioxide adsorption columns 3a and 3b used were each one in which the GIS-type zeolite molded article of Production Example 1 was packed as the adsorbent. The volume x and the void ratio of the adsorbent packed in the adsorption column were respectively 0.69 L and 31%. Accordingly, 5.5x and 0.10x serving as indexes of the amount Q of the carbon dioxide used for cleaning were respectively 3.80 NL and 0.069 NL.
A mixed gas including 60% by volume of methane and 40% by volume of carbon dioxide was used. The moisture content of the mixed gas was 98 ppm by volume.

(Operation 1)

The automatic valve AV1 and the automatic valve AV3, among the automatic valves AV1 to AV6 that were all in a closed state, were opened, and the mixed gas at 25°C, which was monitored by a flow meter 11 in a pipe 1 so as to be at a flow rate of 8.0 NL/min, was supplied at 101 kPa to the carbon dioxide adsorption column 3a. When the carbon dioxide concentration exceeded 5% by volume in the component analyzer 73, the automatic valve AV1 was closed and at the same time the automatic valve AV7 was opened to allow carbon dioxide to flow from the carbon dioxide tank 2 to the adsorption column 3a, thereby pushing out a gas including a large amount of methane, in the adsorption column 3a. When the carbon dioxide concentration exceeded 8% by volume in the component analyzer 73, the automatic valve AV3 and the automatic valve AV7 were closed and at the same time the automatic valve AV2 and the automatic valve AV4 were opened to switch supply of a starting material gas to the carbon dioxide adsorption column 3a to such supply to the column 3b. The whole amount of gas flowing out from the carbon dioxide adsorption column 3a until such switching was recovered. (The gas obtained was defined as gas 1 (methane).) The carbon dioxide adsorption column 3a was reduced in pressure by the pressure reducing apparatus 9 with opening of the automatic valve AV5, and thus the pressure of the carbon dioxide adsorption column was 2 kPa to perform desorption operation, resulting in recovery of gas from the carbon dioxide adsorption column 3a. (The gas obtained was defined as gas 2 (carbon dioxide).) The temperature of the desorbed gas was 35°C on average. The foregoing operation was defined as Operation 1.

(Operation 2)

Subsequently, when the carbon dioxide concentration of gas flowing out from the carbon dioxide adsorption column 3b exceeded 5% by volume in the component analyzer 73, the automatic valve AV2 was closed and at the same time the automatic valve AV8 was opened to allow carbon dioxide to flow from the carbon dioxide tank 2 to the adsorption column 3b, thereby pushing out a gas including a large amount of methane, in the adsorption column 3b. When the carbon dioxide concentration exceeded 8% by volume in the component analyzer 73, the automatic valve AV4 and the automatic valve AV8 were closed and at the same time the automatic valve AV1 and the automatic valve AV3 were opened to switch supply of a starting material gas to the carbon dioxide adsorption column 3b to such supply to the carbon dioxide adsorption column 3a. The amount Q of the carbon dioxide used for cleaning was here 3.06 NL, and was in a preferred range. The carbon dioxide adsorption column 3b was reduced in pressure by the pressure reducing apparatus 9 with opening of the automatic valve AV6, and thus the pressure of the carbon dioxide adsorption column 3b was 2 kPa to perform desorption operation, resulting in recovery of gas from the carbon dioxide adsorption column 3b. The foregoing operation was defined as Operation 2.
Operations 1 and 2 above were repeated 10000 times and Operation 1 was performed again, and thus the methane concentration in gas 1 obtained was 97.7% by volume (the purity of the gaseous substance A extracted in the adsorption step once was 97.7% by volume), and the carbon dioxide concentration in gas 2 was 96.5% by volume (the purity of the carbon dioxide extracted in the desorption step once was 96.5% by volume). The rates of recovery were determined, and the rate of recovery of methane in gas 1 obtained in the adsorption step once was 97.7% and the rate of recovery of carbon dioxide in gas 2 obtained in the desorption step once was 96.5%. The rate of powdering in Example 1 was 0.10% by mass, and powdering of the adsorbent could be suppressed.

Example 2

The cleaning step was carried out by setting the pressure of the mixed gas to 300 kPa to complete supply of the mixed gas to the adsorption column 3a, thereafter closing the automatic valve AV1 and opening the automatic valve AV3 and also performing connection to a gas passage of a starting material gas by the passage control valve 41 to drop the gas pressure in the adsorption column to ordinary pressure (101 kPa) and also return a gas released, to a starting material, before flowing of carbon dioxide from the carbon dioxide tank 2 to the adsorption column 3a, and, in the case of completion of supply of the mixed gas to the adsorption column 3b, closing the automatic valve AV2 and opening the automatic valve AV4 and also performing connection to a gas passage of a starting material gas by the passage control valve 41 to drop the gas pressure in the adsorption column to ordinary pressure (101 kPa) and also return a gas released, to a starting material, and then allow carbon dioxide to flow to the adsorption column from the carbon dioxide tank 2. The amount Q of the carbon dioxide used for cleaning was 3.32 NL, and was in a preferred range. Other operations than the above were performed in the same manner as in Example 1. The methane concentration in gas 1 obtained was 97.6% by volume, and the carbon dioxide concentration in gas 2 obtained was 96.5% by volume. The rates of recovery were determined, and the rate of recovery of methane in gas 1 obtained in the adsorption step once was 97.7% and the rate of recovery of carbon dioxide in gas 2 obtained in the desorption step once was 96.6%. The rate of powdering was 0.14% by mass, and powdering of the adsorbent could be suppressed.

Example 3

Carbon dioxide and methane were separated and recovered from a mixed gas of the carbon dioxide and the methane by the same method as in Example 1 except that one in which the GIS-type zeolite molded article of Production Example 1 was packed was used as each of the carbon dioxide adsorption columns 3a and 3b, and the amount Q of the carbon dioxide used for cleaning was 0.50 NL. After the separation and recovery, the rate of powdering was measured and thus was 0.08% by mass, and powdering of the adsorbent could be suppressed. The methane concentration and the rate of recovery of methane in gas 1 obtained were respectively 97.6% by volume and 95.2%, and the carbon dioxide concentration and the rate of recovery in gas 2 obtained were respectively 94.9% by volume and 96.3%.

Example 4

Carbon dioxide and methane were separated and recovered from a mixed gas of the carbon dioxide and the methane by the same method as in Example 1 except that one in which the GIS-type zeolite molded article of Production Example 2 was packed was used as each of the carbon dioxide adsorption columns 3a and 3b, and the amount Q of the carbon dioxide used for cleaning was 3.22 NL. The volume x and the void ratio of the adsorbent packed were respectively 0.68 L and 32%. Accordingly, 5.5x and 0.1x serving as indexes of the amount Q of the carbon dioxide used for cleaning were respectively 3.74 NL and 0.068 NL. After the separation and recovery, the rate of powdering was measured and thus was 0.19% by mass, and powdering of the adsorbent could be suppressed. The methane concentration and the rate of recovery of methane in gas 1 obtained were respectively 97.2% by volume and 94.6%, and the carbon dioxide concentration and the rate of recovery in gas 2 obtained were respectively 94.3% by volume and 96.5%.

Example 5

Carbon dioxide and methane were separated and recovered from a mixed gas of the carbon dioxide and the methane by the same method as in Example 2 except that one in which the GIS-type zeolite molded article of Production Example 2 was packed was used as each of the carbon dioxide adsorption columns 3a and 3b, and the amount Q of the carbon dioxide used for cleaning was 3.55 NL. After the separation and recovery, the rate of powdering was measured and thus was 0.21% by mass, and powdering of the adsorbent could be suppressed. The methane concentration and the rate of recovery of methane in gas 1 obtained were respectively 97.2% by volume and 94.8%, and the carbon dioxide concentration and the rate of recovery in gas 2 obtained were respectively 94.8% by volume and 96.3%.

Example 6

Carbon dioxide and methane were separated and recovered from a mixed gas of the carbon dioxide and the methane by the same method as in Example 1 except that one in which the GIS-type zeolite molded article of Production Example 3 was packed was used as each of the carbon dioxide adsorption columns 3a and 3b, and the amount Q of the carbon dioxide used for cleaning was 3.60 NL. The volume x and the void ratio of the adsorbent packed were respectively 0.70 L and 30%. Accordingly, 5.5x and 0.10x serving as indexes of the amount Q of the carbon dioxide used for cleaning were respectively 3.85 NL and 0.070 NL. After the separation and recovery, the rate of powdering was measured and thus was 0.31% by mass, and powdering of the adsorbent could be suppressed. The methane concentration and the rate of recovery of methane in gas 1 obtained were respectively 95.8% by volume and 93.4%, and the carbon dioxide concentration and the rate of recovery in gas 2 obtained were respectively 93.6% by volume and 95.2%.

Example 7

Carbon dioxide and methane were separated and recovered from a mixed gas of the carbon dioxide and the methane by the same method as in Example 2 except that one in which the GIS-type zeolite molded article of Production Example 3 was packed was used as each of the carbon dioxide adsorption columns 3a and 3b, and the amount Q of the carbon dioxide used for cleaning was 3.76 NL. After the separation and recovery, the rate of powdering was measured and thus was 0.38% by mass, and powdering of the adsorbent could be suppressed. The methane concentration and the rate of recovery of methane in gas 1 obtained were respectively 95.8% by volume and 94.1%, and the carbon dioxide concentration and the rate of recovery in gas 2 obtained were respectively 93.9% by volume and 95.1%.

Example 8

Carbon dioxide and methane were separated and recovered from a mixed gas of the carbon dioxide and the methane by the same method as in Example 1 except that one in which the GIS-type zeolite molded article of Production Example 4 was packed was used as each of the carbon dioxide adsorption columns 3a and 3b, and the amount Q of the carbon dioxide used for cleaning was 3.60 NL. The volume x and the void ratio of the adsorbent packed were respectively 0.68 L and 32%. Accordingly, 5.5x and 0.10x serving as indexes of the amount Q of the carbon dioxide used for cleaning were respectively 3.74 NL and 0.068 NL. After the separation and recovery, the rate of powdering was measured and thus was 0.38% by mass, and powdering of the adsorbent could be suppressed. The methane concentration and the rate of recovery of methane in gas 1 obtained were respectively 95.6% by volume and 93.1%, and the carbon dioxide concentration and the rate of recovery in gas 2 obtained were respectively 95.2% by volume and 95.0%.

Example 9

Carbon dioxide and methane were separated and recovered from a mixed gas of the carbon dioxide and the methane by the same method as in Example 2 except that one in which the GIS-type zeolite molded article of Production Example 5 was packed was used as each of the carbon dioxide adsorption columns 3a and 3b, and the amount Q of the carbon dioxide used for cleaning was 3.70 NL. The volume x and the void ratio of the adsorbent packed were respectively 0.68 L and 32%. Accordingly, 5.5x and 0.10x serving as indexes of the amount Q of the carbon dioxide used for cleaning were respectively 3.74 NL and 0.068 NL. After the separation and recovery, the rate of powdering was measured and thus was 0.41% by mass, and powdering of the adsorbent could be suppressed. The methane concentration and the rate of recovery of methane in gas 1 obtained were respectively 95.7% by volume and 93.3%, and the carbon dioxide concentration and the rate of recovery in gas 2 obtained were respectively 93.6% by volume and 95.1%.

Comparative Example 1

Carbon dioxide and methane were separated and recovered from a mixed gas of the carbon dioxide and the methane by the same method as in Example 1 except that the amount Q of the carbon dioxide used for cleaning was 11.5 NL. After the separation and recovery, the rate of powdering was measured and thus was 2.12% by mass, and powdering of the adsorbent could be suppressed. The methane concentration and the rate of recovery of methane in gas 1 obtained were respectively 97.7% by volume and 97.9%, and the carbon dioxide concentration and the rate of recovery in gas 2 obtained were respectively 97.0% by volume and 96.9%.

Comparative Example 2

Carbon dioxide and methane were separated and recovered from a mixed gas of the carbon dioxide and the methane by the same method as in Example 2 except that the amount Q of the carbon dioxide used for cleaning was 12.3 NL. After the separation and recovery, the rate of powdering was measured and thus was 2.54% by mass, and powdering of the adsorbent could be suppressed. The methane concentration and the rate of recovery of methane in gas 1 obtained were respectively 97.7% by volume and 97.8%, and the carbon dioxide concentration and the rate of recovery in gas 2 obtained were respectively 97.0% by volume and 97.0%.

Comparative Example 3

Carbon dioxide and methane were separated and recovered from a mixed gas of the carbon dioxide and the methane by the same method as in Example 6 except that the amount Q of the carbon dioxide used for cleaning was 6.01 NL. After the separation and recovery, the rate of powdering was measured and thus was 1.88% by mass, and powdering of the adsorbent could be suppressed. The methane concentration and the rate of recovery of methane in gas 1 obtained were respectively 95.8% by volume and 94.9%, and the carbon dioxide concentration and the rate of recovery in gas 2 obtained were respectively 95.2% by volume and 95.3%.

Comparative Example 4

Carbon dioxide and methane were separated and recovered from a mixed gas of the carbon dioxide and the methane by the same method as in Example 7 except that the amount Q of the carbon dioxide used for cleaning was 6.13 NL. After the separation and recovery, the rate of powdering was measured and thus was 2.02% by mass, and powdering of the adsorbent could be suppressed. The methane concentration and the rate of recovery of methane in gas 1 obtained were respectively 95.9% by volume and 95.1%, and the carbon dioxide concentration and the rate of recovery in gas 2 obtained were respectively 95.3% by volume and 95.3%.

[Table 1]

| | Adsorbent | | | | | | Adsorption step | Cleaning step | | | CH$_4$ | | CO$_2$ | | Rate of powdering [% by mass] |
|---|---|---|---|---|---|---|---|---|---|---|---|---|---|---|---|
| | Amount of adsorption of CO$_2$ [cc/g] | | | $(V_2\text{-}V_1)$ /$V_1$ | $(V_3\text{-}V_2)$ /$V_2$ | Amount of adsorption of CH$_4$ [cc/g] | CO$_2$/CH$_4$ adsorption selectivity | Running pressure [kPa] | Q[NL] | | Amount of cleaning [NL] | Purity [% by volume] | Rate of recovery [%] | Purity [% by volume] | Rate of recovery [%] | |
| | V$_1$ | V$_2$ | V$_3$ | | | | | | 0.10x | 5.5x | | | | | | |
| Example 1 | 42.4 | 46.9 | 47.1 | 0.106 | 0.004 | 3.5 | 13.4 | 101 | 0.069 | 3.80 | 3.06 | 97.7 | 97.7 | 96.5 | 96.5 | 0.10 |
| Example 2 | 42.4 | 46.9 | 47.1 | 0.106 | 0.004 | 3.5 | 13.4 | 300 | 0.069 | 3.80 | 3.32 | 97.6 | 97.7 | 96.5 | 96.6 | 0.14 |
| Example 3 | 42.4 | 46.9 | 47.1 | 0.106 | 0.004 | 3.5 | 13.4 | 101 | 0.069 | 3.80 | 0.5 | 97.6 | 95.2 | 94.9 | 96.3 | 0.08 |
| Example 4 | 35.6 | 41.2 | 47.1 | 0.157 | 0.143 | 3.1 | 13.3 | 101 | 0.068 | 3.74 | 3.22 | 97.2 | 94.6 | 94.3 | 96.2 | 0.19 |
| Example 5 | 35.6 | 41.2 | 47.1 | 0.157 | 0.143 | 3.1 | 13.3 | 300 | 0.068 | 3.74 | 3.55 | 97.2 | 94.8 | 94.8 | 96.3 | 0.21 |
| Example 6 | 34.0 | 39.7 | 46.1 | 0.168 | 0.161 | 3.0 | 13.2 | 101 | 0.070 | 3.85 | 3.60 | 95.8 | 93.4 | 93.6 | 95.2 | 0.31 |
| Example 7 | 34.0 | 39.7 | 46.1 | 0.168 | 0.161 | 3.0 | 13.2 | 300 | 0.070 | 3.85 | 3.76 | 95.8 | 94.1 | 93.9 | 95.1 | 0.38 |
| Example 8 | 35.0 | 40.5 | 47.1 | 0.157 | 0.163 | 3.4 | 11.9 | 101 | 0.068 | 3.74 | 3.60 | 95.6 | 93.1 | 93.2 | 95.0 | 0.38 |
| Example 9 | 33.1 | 39.3 | 44.5 | 0.187 | 0.132 | 3.3 | 11.9 | 500 | 0.068 | 3.74 | 3.70 | 95.7 | 93.3 | 93.6 | 95.1 | 0.41 |
| Comparative Example 1 | 42.4 | 46.9 | 47.2 | 0.106 | 0.004 | 3.5 | 13.4 | 101 | 0.069 | 3.80 | 11.5 | 97.7 | 97.9 | 97.0 | 96.9 | 2.12 |
| Comparative Example 2 | 42.4 | 46.9 | 47.1 | 0.106 | 0.004 | 3.5 | 13.4 | 300 | 0.069 | 3.80 | 12.3 | 97.7 | 97.8 | 97.0 | 97.0 | 2.54 |
| Comparative Example 3 | 34.0 | 39.7 | 46.1 | 0.168 | 0.161 | 3.0 | 13.2 | 101 | 0.070 | 3.85 | 6.01 | 95.8 | 94.9 | 95.2 | 95.3 | 1.88 |
| Comparative Example 4 | 34.0 | 39.7 | 46.1 | 0.168 | 0.161 | 3.0 | 13.2 | 300 | 0.070 | 3.85 | 6.13 | 95.9 | 95.1 | 95.3 | 95.3 | 2.02 |

## EP 4 711 027 A1

### Industrial Applicability

The gas separation method and the gas separation apparatus of the present invention can each produce a methane gas purified, with carbon dioxide being recovered from, for example, biogas, and has industrial applicability.

### Reference Signs List

100 gas separation apparatus
1 mixed gas supply line
11 flow meter
12 moisture meter
13 component analyzer
14 blower
2: carbon dioxide tank
3a, 3b carbon dioxide adsorption column
31a, 31b fixed bed
41 passage control valve
5 carbon dioxide recovery line
53a, 53b manometer
51 flow meter
52 moisture meter
54 component analyzer
7 gaseous substance A recovery line
71 flow meter
72 moisture meter
73 component analyzer
8 purge line
81 flow meter
9 pressure reducing apparatus
10 blower
AV1, AV2, AV3, AV4, AV5, AV6, AV7, AV8 automatic valve
1000 biogas purification system
200 fermenter
300 desulfurization column
400 siloxane removal apparatus
500 oxygen removal apparatus
600 cooling apparatus
700 dehydration apparatus

### Claims

1. A gas separation method for separating carbon dioxide and a gaseous substance A different from carbon dioxide, from a mixed gas containing the carbon dioxide and the gaseous substance A using an adsorption column packed with an adsorbent, the method comprising

   an adsorption step of introducing the mixed gas into the adsorption column to allow carbon dioxide to be adsorbed onto the adsorbent and to extract a gaseous substance A,
   a cleaning step of introducing carbon dioxide into the adsorption column to discharge the gaseous substance A in the adsorption column and to clean the adsorption column, and
   a desorption step of exhausting carbon dioxide under reduced pressure from the adsorption column, to extract the carbon dioxide from the adsorbent,
   wherein an amount Q [NL] of the carbon dioxide introduced into the adsorption column in the cleaning step satisfies $Q \leq 5.5x$ under the assumption that a volume of the adsorbent packed in the adsorption column is x [L].

2. The gas separation method according to claim 1, wherein the adsorbent in the adsorption step satisfies

$(V_2 - V_1)/V_1 \leq 0.160$ under the assumption that an amount of carbon dioxide adsorption per gram of the adsorbent at a temperature of 35°C and at 40 kPa is $V_1$ and an amount of carbon dioxide adsorption per gram of the adsorbent at a temperature of 35°C and at 100 kPa is $V_2$.

3. The gas separation method according to claim 1, wherein,

in the adsorption step, the adsorption column is in a pressurized state, and
the adsorbent satisfies
$(V_3 - V_2)/V_2 \leq 0.155$ under the assumption that an amount of carbon dioxide adsorption per gram of the adsorbent at a temperature of 35°C and at 100 kPa is $V_2$ and an amount of carbon dioxide adsorption per gram of the adsorbent at a temperature of 35°C and at 200 kPa is $V_3$, and
the method comprises a pressure dropping step of reducing a pressure in the adsorption column after the adsorption step and before the cleaning step.

4. The gas separation method according to claim 1, wherein a rate of recovery of the gaseous substance A is 90% or more based on a total amount of the gaseous substance A in the mixed gas introduced into the adsorption column in the adsorption step.

5. The gas separation method according to claim 1, wherein carbon dioxide is introduced into the adsorption column in the cleaning step, by use of an exhaust pressure of a vacuum pump that exhausts carbon dioxide under reduced pressure from the adsorption column in the desorption step.

6. The gas separation method according to claim 1, wherein the amount Q [NL] of the carbon dioxide introduced into the adsorption column in the cleaning step satisfies Q > 0.10x.

7. The gas separation method according to claim 1, wherein initiation and termination of introduction of carbon dioxide into the adsorption column in the cleaning step are performed by time control.

8. The gas separation method according to claim 1, wherein a purity of the gaseous substance A recovered is 90% by volume or more.

9. The gas separation method according to claim 1, wherein a purity of the carbon dioxide recovered is 90% by volume or more.

10. The gas separation method according to claim 1, wherein the $V_1$ in the adsorbent satisfies $V_1 \geq 20$ cc/g.

11. The gas separation method according to claim 1, wherein the adsorbent is a zeolite.

12. The gas separation method according to claim 11, wherein the adsorbent is a GIS-type zeolite.

13. The gas separation method according to claim 1, wherein an average temperature in the adsorption step is 0°C or more.

14. The gas separation method according to claim 1, wherein an ultimate pressure $P_b$ in the desorption step is 30 kPa or less.

15. The gas separation method according to claim 1, wherein an average temperature in the desorption step is 150°C or less.

16. The gas separation method according to claim 1, wherein a moisture content of the mixed gas is 1000 ppm by volume or less.

17. The gas separation method according to claim 1, wherein the gaseous substance A is at least one selected from methane, ethane, nitrogen, carbon monoxide, hydrogen, argon, and dimethyl ether.

18. A method for producing a purified gas, comprising obtaining a purified gaseous substance A or purified carbon dioxide by the gas separation method according to any one of claims 1 to 17.

19. A gas separation apparatus that separates carbon dioxide and a gaseous substance A different from carbon dioxide, from a mixed gas containing the carbon dioxide and the gaseous substance A, the gas separation apparatus comprising

an adsorption column packed with an adsorbent that adsorbs carbon dioxide,
a gaseous substance A recovery line that extracts the gaseous substance A from the adsorption column,
a carbon dioxide recovery line that extracts carbon dioxide from the adsorption column having a pressure reducing apparatus,
a carbon dioxide accommodating tank that accommodates carbon dioxide sent from the carbon dioxide recovery line, and
a carbon dioxide purge line that supplies carbon dioxide from the carbon dioxide accommodating tank to the adsorption column,
wherein the adsorbent satisfies
$(V_2 - V_1)/V_1 \leq 0.160$ under the assumption that an amount of carbon dioxide adsorption per gram of the adsorbent at a temperature of 35°C and at 40 kPa is $V_1$ and an amount of carbon dioxide adsorption per gram of the adsorbent at a temperature of 35°C and at 100 kPa is $V_2$.

Figure 1

Figure 2

Figure 3

# EP 4 711 027 A1

<table>
<tr><td colspan="2"><b>INTERNATIONAL SEARCH REPORT</b></td><td>International application No.<br><br><b>PCT/JP2024/016160</b></td></tr>
</table>

**A. CLASSIFICATION OF SUBJECT MATTER**

*B01D 53/047*(2006.01)i; *B01D 53/62*(2006.01)i; *B01D 53/82*(2006.01)i; *C01B 32/50*(2017.01)i
FI: B01D53/047 ZAB; B01D53/62; B01D53/82; C01B32/50

According to International Patent Classification (IPC) or to both national classification and IPC

**B. FIELDS SEARCHED**

Minimum documentation searched (classification system followed by classification symbols)

B01D53/02-53/12; B01D53/34-53/85,53/92,53/96; C01B32/50;C01B39/00-39/54;B01J20/00-20/28,20/30-20/34

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br><br>Y | JP 2015-67504 A (TAIYO NIPPON SANSO CORP.) 13 April 2015 (2015-04-13)<br>    claims, paragraphs [0023]-[0061], examples 1, 2, fig. 1-3 | 1, 4-9, 13-18<br><br>2, 3, 10-12, 19 |
| Y | KR 10-2021-0061509 A (POSTECH RESEARCH AND BUSINESS DEVELOPMENT FOUNDATION) 28 May 2021 (2021-05-28)<br>    title, claims 1-10, examples 1, 2, fig. 3 | 2, 3, 10-12, 19 |
| P, Y | WO 2023/190609 A1 (ASAHI KASEI KABUSHIKI KAISHA) 05 October 2023 (2023-10-05)<br>    paragraphs [0117]-[0121], [0144], production example 1, examples 1, 4, fig. 1, 2 | 2, 3, 10-12 |
| X | JP 1-203212 A (KABUSHIKI KAISHA KOBE SEIKO SHO) 16 August 1989 (1989-08-16)<br>    p. 1, lower right column, line 17 to p. 2, upper right column, line 10, p. 3, upper left column, line 18 to p. 6, upper right column, line 11, fig. 1, 2, 4, 5 | 1, 6, 7, 13-15, 17, 18 |
| X | JP 10-101318 A (KANKOKU ENERG GIJUTSU KENKYUSHO) 21 April 1998 (1998-04-21)<br>    claim 1, paragraphs [0007]-[0018] | 19 |

☑ Further documents are listed in the continuation of Box C.      ☑ See patent family annex.

| | | |
|---|---|---|
| *   Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family | |

| Date of the actual completion of the international search | Date of mailing of the international search report |
|---|---|
| **12 July 2024** | **30 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

| International application No. |
| --- |
| **PCT/JP2024/016160** |

**C.    DOCUMENTS CONSIDERED TO BE RELEVANT**

| Category* | Citation of document, with indication, where appropriate, of the relevant passages | Relevant to claim No. |
| --- | --- | --- |
| A | WO 2023/067840 A1 (ASAHI KASEI KABUSHIKI KAISHA) 27 April 2023 (2023-04-27) entire text, all drawings | 1-19 |

Form PCT/ISA/210 (second sheet) (July 2022)

**INTERNATIONAL SEARCH REPORT**
Information on patent family members

International application No.

**PCT/JP2024/016160**

| Patent document cited in search report | | | Publication date (day/month/year) | Patent family member(s) | | | Publication date (day/month/year) |
|---|---|---|---|---|---|---|---|
| JP | 2015-67504 | A | 13 April 2015 | (Family: none) | | | |
| KR | 10-2021-0061509 | A | 28 May 2021 | (Family: none) | | | |
| WO | 2023/190609 | A1 | 05 October 2023 | (Family: none) | | | |
| JP | 1-203212 | A | 16 August 1989 | (Family: none) | | | |
| JP | 10-101318 | A | 21 April 1998 | KR | 10-0173399 | B1 | |
| WO | 2023/067840 | A1 | 27 April 2023 | AU | 2022374148 | A | |
| | | | | CA | 3234989 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2015067504 A